(19) Europäisches Patentamt / European Patent Office / Office européen des brevets

(11) **EP 3 674 796 B1**

(12) **EUROPEAN PATENT SPECIFICATION**

(45) Date of publication and mention of the grant of the patent: **22.11.2023 Bulletin 2023/47**

(21) Application number: **18848452.1**

(22) Date of filing: **26.06.2018**

(51) International Patent Classification (IPC):
***B41C 1/10*** (2006.01) ***C08F 20/10*** (2006.01)
***C08F 20/56*** (2006.01) ***C08F 22/40*** (2006.01)
***C08F 120/56*** (2006.01) ***C08F 120/58*** (2006.01)
***C08F 120/60*** (2006.01) ***C08F 122/40*** (2006.01)
***C08F 220/58*** (2006.01) ***C09D 125/14*** (2006.01)

(52) Cooperative Patent Classification (CPC):
(C-Sets available)
**B41C 1/1025; C08F 120/56; C08F 120/58; C08F 120/60; C08F 122/40; C08F 220/58; C09D 125/14;** B41C 2210/04; B41C 2210/06; B41C 2210/08; B41C 2210/10; B41C 2210/24; B41C 2210/26 (Cont.)

(86) International application number: **PCT/JP2018/024238**

(87) International publication number: **WO 2019/039074 (28.02.2019 Gazette 2019/09)**

(54) **NEGATIVE-TYPE PLANOGRAPHIC PRINTING PLATE PRECURSOR AND METHOD FOR PRODUCING PLANOGRAPHIC PRINTING PLATE**

NEGATIV ARBEITENDER PLANOGRAFISCHER DRUCKPLATTENVORLÄUFER UND VERFAHREN ZUR HERSTELLUNG EINER PLANOGRAFISCHEN DRUCKPLATTE

PRÉCURSEUR DE PLAQUE D'IMPRESSION PLANOGRAPHIQUE NÉGATIVE ET PROCÉDÉ DE FABRICATION D'UNE PLAQUE D'IMPRESSION PLANOGRAPHIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.08.2017 JP 2017162182**

(43) Date of publication of application: **01.07.2020 Bulletin 2020/27**


(73) Proprietor: **FUJIFILM Corporation**
**Tokyo 106-8620 (JP)**

(72) Inventors:
- **MIYAKAWA, Yuya**
  **Haibara-gun**
  **Shizuoka 421-0396 (JP)**
- **HIRANO, Shuji**
  **Haibara-gun**
  **Shizuoka 421-0396 (JP)**

(74) Representative: **Hoffmann Eitle**
**Patent- und Rechtsanwälte PartmbB**
**Arabellastraße 30**
**81925 München (DE)**


(56) References cited:
**EP-A1- 1 243 413** **EP-A1- 3 632 694**
**WO-A1-2010/141067** **WO-A1-2017/186556**
**JP-A- 2002 225 452** **JP-A- 2003 001 959**
**JP-A- 2003 034 090** **JP-A- 2008 544 322**
**JP-A- 2012 198 470** **JP-A- 2013 134 341**
**JP-A- 2013 504 632**


Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 125/14, C08L 33/26;**
C08F 212/08, C08F 220/44;
C08F 220/58, C08F 220/44;
C08F 220/58, C08F 220/56

## Description

The present disclosure relates to a negative-type planographic printing plate precursor and a method for producing a planographic printing plate.

Generally, a planographic printing plate consists of a lipophilic image area that receives ink in a printing process and a hydrophilic non-image area that receives dampening water. Planographic printing refers to a method in which the properties of water and printing ink that repel each other are used, the lipophilic image area of the planographic printing plate is used as an ink-receiving portion, the hydrophilic non-image area is used as a dampening water-receiving portion (non-ink-receiving portion), a difference in the adhesive property of ink is caused on the surface of the planographic printing plate, the ink is absorbed only in the image area, and then the ink is transferred to a body to be printed such as paper, thereby carrying out printing.

In order to produce this planographic printing plate, in the related art, a planographic printing plate precursor (PS plate) formed by providing a lipophilic photosensitive resin layer (photosensitive layer, image-recording layer) on a hydrophilic support has been broadly used. Generally, a plate is made using a method in which a planographic printing plate precursor is exposed to light through an original drawing such as a lith film, a portion which is to be an image area of the image-recording layer is left, the other unnecessary portion of the image-recording layer is dissolved and removed using an alkaline developer or an organic solvent, and a hydrophilic surface of a support is exposed, thereby forming a non-image area, and a planographic printing plate is obtained.

As described above, in a plate-producing step of a planographic printing plate precursor of the related art, a step of dissolving and removing an unnecessary image-recording layer using a developer or the like after exposure is required; however, from the viewpoint of the environment and safety, a process using a developer that is more neutral or a small amount of waste liquid can be exemplified as a problem. Particularly, in recent years, the disposal of waste liquid discharged due to a wet process has become a large interest in the entire industrial field in consideration of the global environment, and a demand for solving the above-described problem has been further intensifying.

Recently, digitalization techniques for electronically processing, storing, and outputting image information using a computer have been broadly distributed, and a variety of new image output methods corresponding to such digitalization techniques have been put into practical use. Accordingly, a computer-to-plate (CTP) technique in which digitalized image information is carried by a highly convergent radiation ray such as laser light, and a planographic printing plate precursor is scanned by and exposed to the light, thereby directly manufacturing a planographic printing plate without using a lith film has been drawing attention. Therefore, it has become one of important technical objects to obtain a planographic printing plate precursor that has been adapted to the above-described technique.

As planographic printing plate precursors of the related art, for example, planographic printing plate precursors described in JP2002-333705A are exemplified.

JP2002-333705A describes a method for manufacturing a precursor of a negatively acting thermosensitive planographic printing plate, the method including a phase of entirely heating an image-recording layer using two kinds of polymer particles having different glass transition temperatures, which are a hydrophobic thermoplastic polymer particle A that is neither soluble nor swellable in an aqueous alkali developer and a polymer particle B that is soluble or swellable in an aqueous alkali developer, but is neither soluble nor swellable in water, at a temperature higher than the softening temperature of the polymer particle B at which the cohesion of the particle A does not occur.

EP 3 632 694 A1 relates to a lithographic printing plate precursor having an image-recording layer on a hydrophilic support, in which the image-recording layer includes a polymer having a constitutional unit derived from a monomer having a solubility parameter of 20 $MPa^{1/2}$ or more, an infrared absorber, and a polymer particle. JP 2013 504632 A and JP 2003 001959 A describe compositions for forming an image-recording layer. JP 2002 225452 A describes a heat sensitive layer of the lithographic printing plate precursor containing polymer fine particles of poly(methylhydroxystyrene) and polymer fine particles of a copolymer made from ethylmethacrylate and methylmethacrylate. JP 2008 544322 A describes a heat-sensitive imaging element comprising an IR dye. JP 2003 034090 A describes a heat sensitive lithographic printing original plate.

As planographic printing plates, there is a demand for planographic printing plates being excellent in terms of the number of printable pieces of paper (hereinafter, also referred to as "printing resistance").

Particularly, in recent years, as ink for printing, there is a case in which ink that cures by irradiation with ultraviolet (UV) rays (also referred to as "ultraviolet-curable ink") is used.

The ultraviolet-curable ink has the following advantages. The ultraviolet-curable ink can be instantly dried and is thus highly productive, generally contains a small content of a solvent or no solvent and thus easily reduces environmental contamination, and is capable of forming an image without being dried by heat or by being dried by heat for a short period of time and is thus applicable to a broad range of printing subjects.

Therefore, planographic printing plates capable of providing planographic printing plates having excellent printing resistance in the case of using the ultraviolet-curable ink are considered to be extremely useful in terms of industries.

The present inventors carried out intensive studies and consequently found that, regarding the planographic

printing plate precursor of JP2002-333705A, there is a problem in that, particularly in the case of using the ultraviolet-curable ink as ink, the printing resistance of a planographic printing plate to be obtained is not sufficient.

An object that one embodiment of the present invention attempts to attain is to provide a negative-type planographic printing plate precursor from which a planographic printing plate having excellent printing resistance can be obtained even in the case of using an ultraviolet-curable ink.

An object that another embodiment of the present invention attempts to attain is to provide a method for producing a planographic printing plate using the negative-type planographic printing plate precursor.

According to the embodiment of the present invention, it is possible to provide a negative-type planographic printing plate precursor from which a planographic printing plate having excellent printing resistance can be obtained even in the case of using an ultraviolet-curable ink.

According to the another embodiment of the present invention, it is possible to provide a method for producing a planographic printing plate using the negative-type planographic printing plate precursor.

Hereinafter, the contents of the present disclosure will be described in detail. Constituent requirements mentioned below will be described on the basis of typical embodiments of the present disclosure, but the present disclosure is not limited to such embodiments.

Meanwhile, in the specification of the present application, a numerical range expressed using "to" includes numerical values described before and after "to" as the lower limit value and the upper limit value.

In addition, in the specification of the present application, a group (atomic group) that is not expressed whether the group is substituted or not substituted refers to both a group not having a substituent and a group having a substituent. For example, an "alkyl group" refers not only to an alkyl group not having a substituent (unsubstituted alkyl group) but also to an alkyl group having a substituent (substituted alkyl group).

In addition, in the present disclosure, "% by mass" and "% by weight" have the same meaning, and "parts by mass" and "parts by weight" have the same meaning.

Furthermore, in the present disclosure, a combination of two or more preferred aspects is a more preferred aspect.

In the present specification, the term "step" refers not only to an independent step but also a step by which an intended action of the step is attained even in the case of being not clearly distinguishable from other steps.

In addition, unless particularly otherwise described, the weight-average molecular weight (Mw) in the present disclosure refer to a molecular weight that is detected using a gel permeation chromatography (GPC) analyzer in which columns of TSKgel GMHxL, TSKgel G4000HxL, and TSKgel G2000HxL (all are trade names manufactured by Tosoh Corporation) are used, solvent tetrahydrofuran (THF), and a differential refractometer and is converted using polystyrene as a standard substance.

Hereinafter, the present disclosure will be described in detail.

(Negative-type planographic printing plate precursor)

A negative-type planographic printing plate precursor according to an embodiment of the present disclosure (hereinafter, also simply referred to as the "planographic printing plate precursor") has an image-recording layer on an aluminum support, the image-recording layer includes a polymer particle 1 having a constitutional unit made of a monomer having a solubility parameter (hereinafter, also referred to as the "SP value") of 23 $MPa^{1/2}$ or more (hereinafter, also simply referred to as the "particle 1"), a thermoplastic polymer particle 2 (hereinafter, also simply referred to as the "particle 2"), and an infrared absorber, and at least any of fusion or aggregation of the thermoplastic polymer particle 2 is caused by heat during exposure, and an image can be formed.

As a result of intensive studies, the present inventors found that, in a case in which the above-described constitution is provided, it is possible to provide a planographic printing plate precursor from which a planographic printing plate having excellent printing resistance even in the case of using an ultraviolet-curable ink (hereinafter, also referred to as UV printing resistance) can be obtained.

A detailed mechanism for the obtainment of the above-described effect is not clear, but is assumed as described below.

In the case of including the polymer particle 1 having a constitutional unit made of a monomer having a solubility parameter of 23 $MPa^{1/2}$ or more, the difference in the solubility parameter increases between a solvent, a polymerizable compound, or the like included in ink that is used during printing and the particle 1, and thus it is considered that the dissolution of the solvent, the polymerizable compound, or the like in an image area is suppressed, and the printing resistance improves even in the case of using an ultraviolet-curable ink. In addition, it is considered that the solubility parameter of the particle 1 is high, and the polarity is high, whereby the interaction between the particle 1 and the infrared absorber improves, and the printing resistance improves even in the case of using an ultraviolet-curable ink.

In addition, the image-recording layer including the particle having a constitutional unit made of a monomer having a solubility parameter of 23 $MPa^{1/2}$ or more is jointly used with the thermoplastic polymer particle 2, whereby a

planographic printing plate precursor which sufficiently ensures sensitivity and has excellent printing resistance in the case of using an ultraviolet-curable ink (UV printing resistance) can be obtained.

<Image-recording layer>

The planographic printing plate precursor according to the embodiment of the present disclosure has an image-recording layer including the polymer particle 1 having a constitutional unit made of a monomer having a solubility parameter of 23 $MPa^{1/2}$ or more, a thermoplastic polymer particle 2, and an infrared absorber.

The image-recording layer used in the present disclosure is a negative-type image-recording layer.

- Polymer particle 1 having constitutional unit made of monomer having solubility parameter of 23 $MPa^{1/2}$ or more -

The image-recording layer in the planographic printing plate precursor according to the embodiment of the present disclosure includes the polymer particle 1 having a constitutional unit made of a monomer having a solubility parameter of 23 $MPa^{1/2}$ or more (hereinafter, also referred to as the "specific monomer").

The particle 1 is a particle different from the thermoplastic polymer particle 2, and the particle 1 may be fused or aggregated by heat being generated during exposure so as to form a hydrophobic phase corresponding to a printing region of a printing plate. The aggregation can be caused by the thermally induced aggregation, softening, or melting of the particle.

From the viewpoint of printing resistance, the solubility parameter of the specific monomer is preferably 23 $MPa^{1/2}$ or more, more preferably 25 $MPa^{1/2}$ or more, still more preferably 27 $MPa^{1/2}$ or more, and particularly preferably 30 $MPa^{1/2}$ or more. In addition, the solubility parameter of the specific monomer is preferably 40 $MPa^{1/2}$ or less and more preferably 35 $MPa^{1/2}$ or less.

In addition, the polymer 1 needs to be a particle of a polymer having a constitutional unit made of a monomer having a solubility parameter of 23 $MPa^{1/2}$ or more and may be a particle of a polymer having both a constitutional unit made of a monomer having a solubility parameter of 23 $MPa^{1/2}$ or more and a constitutional unit made of a monomer having a solubility parameter of less than 23 $MPa^{1/2}$.

Furthermore, the polymer in the particle 1 may be a homopolymer or a copolymer of a monomer having a solubility parameter of 23 $MPa^{1/2}$ or more, but is preferably a homopolymer.

In the polymer in the particle 1, the content of the constitutional unit made of a monomer having a solubility parameter of 23 $MPa^{1/2}$ or more is 80% by mass or more, more preferably 90% by mass or more, and particularly preferably 95% by mass or more.

As the solubility parameter (SP value) in the present disclosure, Hansen solubility parameter will be used. Hansen solubility parameter refers to a parameter expressed in a three-dimensional space by dividing a solubility parameter introduced by Hildebrand into three components of a dispersion element $\delta d$, a polarity element $\delta p$, and a hydrogen bond element $\delta h$, but the SP value in the present disclosure will be expressed as $\delta$ [$MPa^{1/2}$], and a value computed using the following expression will be used.

$$\delta\ [MPa^{1/2}]=(\delta d^2+\delta p^2+\delta h^2)^{1/2}$$

Meanwhile, a lot of the dispersion elements $\delta d$, the polarity elements $\delta p$, and the hydrogen bond elements $\delta h$ have been obtained by Hansen or high successors and are described in Polymer Handbook (fourth edition), VII-698 to 711 in detail.

In addition, the values of Hansen solubility parameter have been investigated for a number of solvents or resins and are described in, for example, Industrial Solvents Handbook written by Wesley L. Archer.

From the viewpoint of printing resistance and developability, the specific monomer or the constitutional unit made of the specific monomer has at least one structure selected from the group consisting of an urethane bond, an urea bond, a hydroxy group, an amide group, a sulfonamide group, an imide group, an amino group, or a sulfonimide group and more preferably has at least one structure selected from the group consisting of an urethane bond or an urea bond.

In addition, from the viewpoint of printing resistance and developability, the polymer in the particle 1 has at least one structure selected from the group consisting of an urethane bond, an urea bond, a hydroxy group, an amide group, a sulfonamide group, an imide group, an amino group, or a sulfonimide group and more preferably has at least one structure selected from the group consisting of an urethane bond or an urea bond.

As the specific monomer, specifically, the following monomers are preferably exemplified.

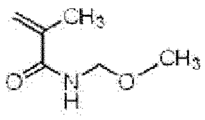

SP value=23.2 MPa$^{1/2}$

A-1

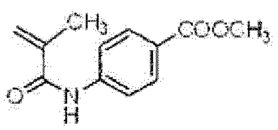

SP value=23.6 MPa$^{1/2}$

A-2

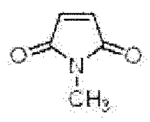

SP value=23.9 MPa$^{1/2}$

A-3

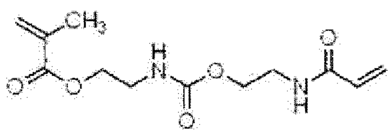

SP value=25.2 MPa$^{1/2}$

A-4

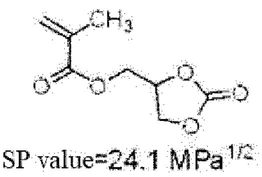

SP value=24.1 MPa$^{1/2}$

A-5

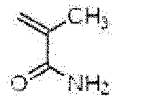

SP value=24.2 MPa$^{1/2}$

A-6

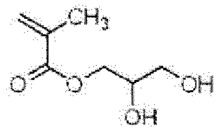

SP value=25.3 MPa$^{1/2}$

A-7

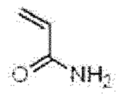

SP value=26.1 MPa$^{1/2}$

A-8

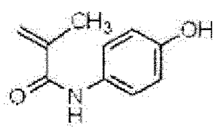

SP value=26.1 MPa$^{1/2}$

A-9

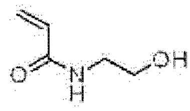

SP value=29.3 MPa$^{1/2}$

A-10

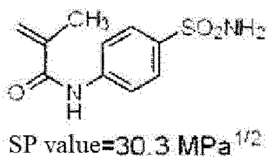

SP value=30.3 MPa$^{1/2}$

A-11

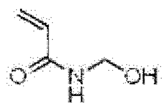

SP value=31.3 MPa$^{1/2}$

A-12

A preferred method for preparing the particle 1 is disclosed in, for example, Paragraphs 0028 and 0029 of EP1859935A.

In addition, the particle 1 may include a component other than the polymer having a constitutional unit made of a monomer having a solubility parameter of 23 MPa$^{1/2}$ or more, and the content thereof is preferably less than 50% by mass, more preferably less than 20% by mass, still more preferably less than 10% by mass, and particularly preferably less than 5% by mass.

The arithmetic particle diameter of the particle 1 is preferably more than 10 nm and less than 100 nm, more preferably more than 15 nm and less than 70 nm, and still more preferably more than 20 nm and less than 50 nm.

The average particle diameter of the particle in the present disclosure is specified as an arithmetic average particle diameter that is measured by photon correlation spectroscopy that is also known as quasi-elastic or dynamic light scattering. The average particle diameter was measured using Brookhaven BI-90 analyzer manufactured by Brookhaven Instrument Company in Holtsville, NY, USA according to the sequence of ISO13321 (first edition, 1996-07-01).

The weight average molecular weight of the particle 1 is preferably in a range of 5,000 to 1,000,000.

From the viewpoint of printing resistance and sensitivity, the content of the particle 1 in the image-recording layer is preferably 10 parts by mass or more and 60 parts by mass or less and particularly preferably 20 parts by mass or more and 45 parts by mass or less in a case in which the total of the content of the particle 1 and the content of the thermoplastic polymer particle 2 in the image-recording layer is set to 100 parts by mass.

In the particle 1, the specific monomer may be used singly or two or more specific monomers may be used.

- Thermoplastic polymer particle 2 -

The image-recording layer includes the thermoplastic polymer particle 2.

The arithmetic particle diameter of the thermoplastic polymer particle 2 is preferably more than 10 nm and less than 40 nm, more preferably more than 15 nm and less than 38 nm, and still more preferably more than 20 nm and less than 36 nm.

The content of the thermoplastic polymer particle 2 is preferably 30% by mass or more, more preferably 35% by mass or more, still more preferably 40% by mass or more, and particularly preferably 40% by mass or more and 85% by mass or less of the mass of all of the components in the image-recording layer.

The thermoplastic polymer particle 2 preferably includes at least one polymer selected from the group consisting

of polyethylene, polyvinyl chloride, polymethyl (meth)acrylate, polyethyl (meth)acrylate, polyvinylidene chloride, poly(meth)acrylonitrile, polyvinyl carbazole, polystyrene, or copolymers thereof.

In addition, regarding the thermoplastic polymer particle 2, the content of the polymer is preferably 50% by mass or more, more preferably 80% by mass or more, and particularly preferably 90% by mass or more.

Among them, the thermoplastic polymer particle 2 preferably includes polystyrene or a derivative thereof, a mixture including polystyrene, poly(meth)acrylonitrile, and a derivative thereof, or a copolymer formed by copolymerizing at least two compounds selected from the group consisting of styrene, (meth)acrylonitrile, or derivatives thereof. The latter copolymer preferably includes 50% by mass or more of a styrene-derived constitutional unit and more includes 65% by mass or more of a styrene-derived constitutional unit. For example, in order to obtain sufficient resistance to an organic chemical substance such as a hydrocarbon that is used in a cleaner of a planographic printing plate, the thermoplastic polymer particle 2 preferably includes 5% by mass or more of a constitutional unit having a nitrogen atom such as a (meth)acrylonitrile-derived constitutional unit and more preferably includes 30% by mass or more of the constitutional unit as described in the specification of EP1219416A. According to the most preferred aspect, the thermoplastic polymer particle 2 is preferably a particle made of a resin having the styrene-derived constitutional unit and the acrylonitrile-derived constitutional unit in a ratio of 1: 1 to 5:1 and more preferably a particle made of a resin having the styrene-derived constitutional unit and the acrylonitrile-derived constitutional unit in a ratio of 1.5:1 to 2.5:1.

In addition, the thermoplastic polymer particle 2 preferably does not include a polyester resin.

The weight average molecular weight of the thermoplastic polymer particle 2 is preferably in a range of 5,000 to 1,000,000.

A preferred method for preparing the thermoplastic polymer particle 2 is disclosed in, for example, Paragraphs 0028 and 0029 of EP1859935A.

The thermoplastic polymer particle 2 is capable of forming an image by causing at least any of fusion or aggregation by heat being generated during exposure so as to form a hydrophobic phase corresponding to a printing region of a printing plate. The aggregation can be caused by the thermally induced aggregation, softening, or melting of the thermoplastic polymer particle 2. There is no specific upper limit of the aggregation temperature of a thermoplastic hydrophobic polymer particle, but the temperature is supposed to be sufficiently lower than the decomposition temperature of the thermoplastic polymer particle 2. The aggregation temperature is preferably a temperature that is lower than a temperature at which the thermoplastic polymer particle 2 decomposes by at least 10°C. In addition, the aggregation temperature is preferably higher than 50°C and more preferably higher than 100°C.

- Infrared absorber -

The image-recording layer includes an infrared absorber.

The infrared absorber has a function of converting absorbed infrared rays to heat and a function of migrating electrons and/or migrating energy to a polymerization initiator described below by being excited by infrared rays. The infrared absorber that is used in the present disclosure is preferably a dye having the maximum absorption at a wavelength of 750 nm to 1,400 nm.

As the dye, it is possible to use a commercially available dye and a well-known dye described in publications, for example, "Dye Handbooks" (edited by the Society of Synthetic Organic Chemistry, Japan and published on 1970). Specific examples thereof include dyes such as an azo dye, a metal complex azo dye, a pyrazolone azo dye, a naphthoquinone dye, an anthraquinone dye, a phthalocyanine dye, a carbonium dye, a quinoneimine dye, a methine dye, a cyanine dye, a squarylium colorant, a pyrylium salt, and a metal thiolate complex.

Among these dyes, as preferred dyes, a cyanine colorant, a squarylium colorant, a pyrylium salt, a nickel thiolate complex, and an indolenine cyanine colorant are exemplified. Furthermore, a cyanine colorant or an indolenine cyanine colorant is more preferably exemplified. Between these, a cyanine colorant is particularly preferred.

Specific examples of the cyanine colorant include a compound described in Paragraphs 0017 to 0019 of JP2001-133969A, a compound described in Paragraphs 0016 to 0021 of JP2002-023360A and Paragraphs 0012 to 0037 of JP2002-040638A, preferably a compound described in Paragraphs 0034 to 0041 of JP2002-278057A and Paragraphs 0080 to 0086 of JP2008-195018A, particularly preferably a compound described in Paragraphs 0035 to 0043 of JP2007-090850A, and a compound described in Paragraphs 0105 to 0113 of JP2012-206495A.

In addition, it is also possible to preferably use a compound described in Paragraphs 0008 and 0009 of JP1993-005005A (JP-H05-005005A) and Paragraphs 0022 to 0025 of JP2001-222101A.

As the pigment, a compound described in Paragraphs 0072 to 0076 of JP2008-195018A is preferred.

The infrared absorber is a compound represented by Formula A.

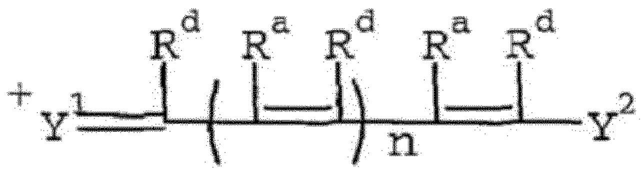

Formula A

In Formula A, $^+Y^1=$ is represented by one of the following structures:

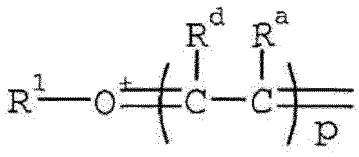

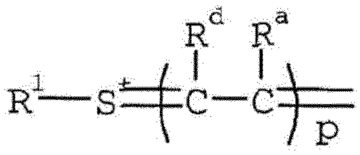

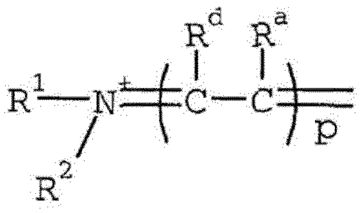

$Y^2-$ is represented by one of the following structures:

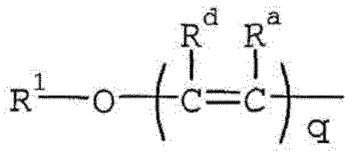

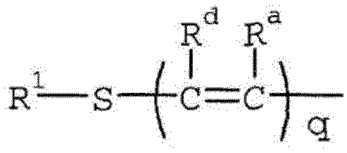

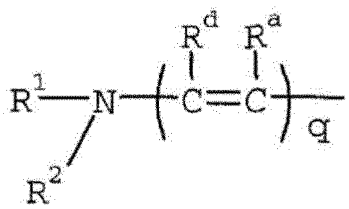

n represents 0, 1, 2, or 3, p and q each independently represent 0, 1, or 2, $R^1$ and $R^2$ each independently represent a hydrocarbon group or two of $R^1$, $R^2$, $R^d$, and $R^a$ include atoms necessary to form a cyclic structure by being integrated with each other and at least one of $R^d$'s represents a group being converted to a group that is a stronger electron-donating body than $R^d$ by a chemical reaction that is induced by irradiation with an infrared ray or exposure to heat, or at least one of $R^a$'s represents a group being converted to a group that is a stronger electron-donating body than $R^a$ by a chemical reaction that is induced by irradiation with an infrared ray or exposure to heat and other $R^d$'s and $R^a$'s each independently represent a group selected from the group consisting of a hydrogen atom, a halogen atom,

$-R^e$, $-OR^f$, $-SR^g$, and $-NR^uR^v$, $R^e$, $R^f$, $R^g$, $R^u$, and $R^v$ each independently represent an aliphatic hydrocarbon group, an aryl group, or a heteroaryl group, and the conversion is conversion causing an increase in absorption of light having a wavelength of 400 nm to 700 nm.

In addition, the hydrocarbon group as $R^1$ and $R^2$ and the aliphatic hydrocarbon group, the aryl group, or the heteroaryl group as $R^e$, $R^f$, $R^g$, $R^u$, and $R^v$ may have a substituent.

In addition, the $R^d$ that is converted by a chemical reaction is preferably any of groups described below.

$-(N{=}CR^{17})_a\ -NR^3\text{-}CO\text{-}R^4,$

$-(N{=}CR^{17})_b\ -NR^5\text{-}SO_2\text{-}R^6,$

$-(N{=}CR^{17})_c\ -NR^{11}\text{-}SO\text{-}R^{12},$

$-SO_2\text{-}N^{R15}R^{16},$

$-S\text{-}L\text{-}CR^7(H)_{1\text{-}d}(R^8)_d\ -NR^9\text{-}COOR^{18}$

In the formulae, a, b, c, and d each independently represent 0 or 1, -L- represents a bonding group, $R^{17}$ represents a hydrogen atom, an aliphatic hydrocarbon group that may be substituted according to circumstances, an aryl group that may be substituted according to circumstances, or a heteroaryl group that may be substituted according to circumstances or $R^{17}$ and $R^3$, $R^{17}$ and $R^5$, or $R^{17}$ and $R^{11}$ include atoms necessary to form a ring structure by being integrated with each other, $R^4$ is $-OR^{10}$, $-NR^{13}R^{14}$, or $-CF_3$, $R^{10}$ represents an aryl group that may be substituted according to circumstances, a heteroaryl group that may be substituted according to circumstances, or an $\alpha$-branched chain-like aliphatic hydrocarbon group, $R^{13}$ and $R^{14}$ each independently represent a hydrogen atom, an aliphatic hydrocarbon group that may be substituted according to circumstances, an aryl group that may be substituted according to circumstances, or a heteroaryl group that may be substituted according to circumstances or $R^{13}$ and $R^{14}$ include atoms necessary to form a ring structure by being integrated with each other, $R^3$ is a hydrogen atom, an aliphatic hydrocarbon group that may be substituted according to circumstances, an aryl group that may be substituted according to circumstances, or a heteroaryl group that may be substituted according to circumstances or $R^3$ includes an atom necessary to form a ring structure by being integrated with at least one of $R^{10}$, $R^{13}$, or $R^{14}$, $R^6$ represents an aliphatic hydrocarbon group that may be substituted according to circumstances, an aryl group that may be substituted according to circumstances, a heteroaryl group that may be substituted according to circumstances, $-OR^{10}$, $-NR^{13}R^{14}$, or $-CF_3$; here, $R^{10}$, $R^{13}$, and $R^{14}$ have the same meaning as those as $R^4$, $R^5$ represents an aliphatic hydrocarbon group that may be substituted according to circumstances, an aryl group that may be substituted according to circumstances, or a heteroaryl group that may be substituted according to circumstances or $R^5$ includes an atom necessary to form a ring structure by being integrated with at least one of $R^{10}$, $R^{13}$, or $R^{14}$, $R^{11}$, $R^{15}$, and $R^{16}$ each independently represent a hydrogen atom, an aliphatic hydrocarbon group that may be substituted according to circumstances, an aryl group that may be substituted according to circumstances, or a heteroaryl group that may be substituted according to circumstances or $R^{15}$ and $R^{16}$ includes an atom necessary to form a ring structure by being integrated with each other, $R^{12}$ represents an aliphatic hydrocarbon group that may be substituted according to circumstances, an aryl group that may be substituted according to circumstances, or a heteroaryl group that may be substituted according to circumstances, $R^7$ and $R^9$ each independently represent a hydrogen atom or an aliphatic hydrocarbon group that may be substituted according to circumstances, $R^8$ represents -COO- or $-COOR^{8'}$; here, $R^{8'}$ represents a hydrogen atom, an alkali metal cation, an ammonium ion, or a mono-, di-, tri-, or tetraalkylammonium ion, and $R^{18}$ represents an aryl group that may be substituted according to circumstances, a heteroaryl group that may be substituted according to circumstances, or an $\alpha$-branched chain-like aliphatic hydrocarbon group.

As the infrared absorber, a compound represented by Formula I is more preferably exemplified.

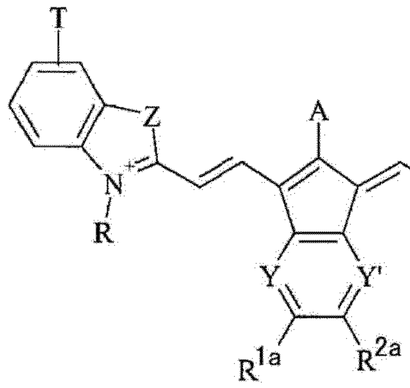

(I)

In Formula I, A represents a hydrogen atom, an alkyl group, aralkyl group, aryl group, or heteroaryl group substituted according to circumstances, a halogen atom, $-OR^{ca}$, $-SR^{da}$, $-SO_2R^{ea}$, $-NR^{fa}R^{ga}$, $-NR^{ha}(SO_2R^{ia})$, or $-NR^{ja}(CO_2R^{ka})$, $R^{ca}$ and $R^{ga}$ each independently represent an aryl group substituted according to circumstances, $R^{da}$, $R^{ea}$, and $R^{fa}$ each independently represent an alkyl group, aralkyl group, aryl group, or heteroaryl group substituted according to circumstances, $R^{ha}$, $R^{ja}$, and $R^{ka}$ each independently represent an alkyl group or aryl group substituted according to circumstances, $R^{ia}$ represents an alkyl group or aryl group substituted according to circumstances or $-NR^{ia1}R^{ia2}$, $R^{ia1}$ and $R^{ia2}$ represent a hydrogen atom or an alkyl group or aryl group substituted according to circumstances; Y and Y' each independently represent -CH- or -N-; $R^{1a}$ and $R^{2a}$ each independently represent a hydrogen atom or an alkyl group or aryl group substituted according to circumstances or represent an atom necessary to form a ring; Z and Z' each independently represent -S-, -CH=CH-, or $-CR^{ea}R^{fa}-$, R and R' each independently represent an alkyl group substituted according to circumstances; T and T' each independently represent a hydrogen atom, an alkyl group, or a cyclic benzo ring substituted according to circumstances.

R and R' are preferably an anionic substituted alkyl group. A preferred anionic substituted alkyl group is $*-(CH_2)_m-X-SO_3-M^+$; $*-(CH_2)_m-X-PO(OH)O-M^+$;$*-(CH_2)_m-(CH_2)CO_2-M^+$;

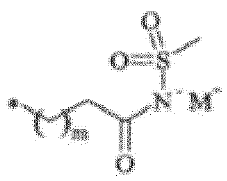

or

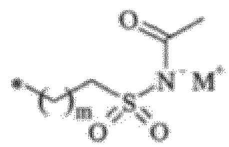

In the formulae, m is 1, 2, 3, or 4; X represents -O-, -S-, or $-CH_2-$; $M^+$ represents a counter ion for balancing the charge; * represents a linking site to a residual molecule.

An appropriate monovalent cation is, for example, $-[NR^{la}R^{ma}R^{na}]^+$, $NR^{la}$, $R^{ma}$, and $R^{na}$ each independently represent a hydrogen atom or an alkyl group, for example, a methyl group, an ethyl group, a propyl group, or an isopropyl group.

A is preferably $-NR^{ha}(SO_2R^{ia})$. In addition, $R^{ia}$ is preferably an alkyl group substituted according to circumstances.

The infrared absorber is preferably a compound having an indenyl group. In addition, the infrared absorber is more preferably a compound represented by Formula I in which Y and Y' are -CH-.

As the infrared absorber, a compound represented by Formula II is still more preferably exemplified.

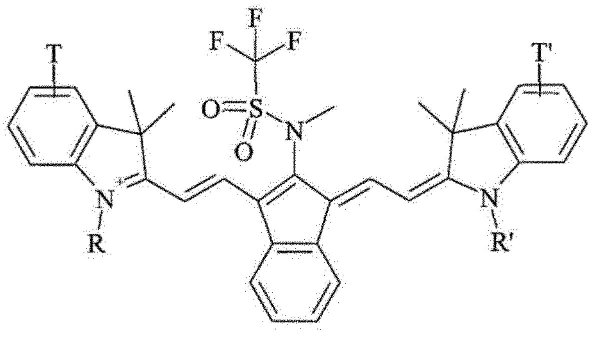

(II)

In Formula II, R and R' and T and T' are identical to those described above, and preferred aspects thereof are also identical thereto.

As the infrared absorber, a compound represented by Formula III is far still more preferably exemplified.

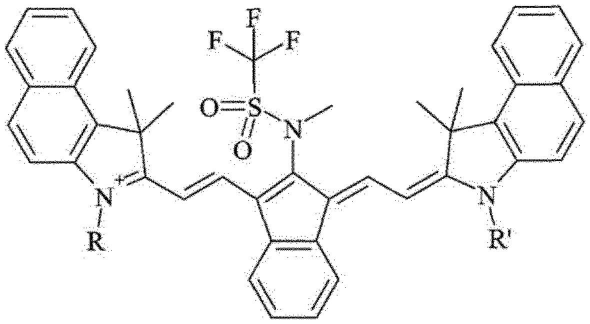

(III)

In Formula III, R and R' are identical to those described above, and preferred aspects thereof are also identical thereto.

As a substituent that is present on the alkyl group, the aralkyl group, the aryl group, or the heteroaryl group according to circumstances, a halogen atom such as a fluorine atom, a chlorine atom, a bromine atom, or an iodine atom, a hydroxy group, an amino group, a (di)alkylamino group, or an alkoxy group is exemplified.

The alkyl group is preferably an alkyl group having 1 to 22 carbon atoms, more preferably an alkyl group having 1 to 12 carbon atoms, and still more preferably an alkyl group having 1 to 6 carbon atoms. As the alkyl group, for example, a methyl group, an ethyl group, a propyl group (an n-propyl group or an isopropyl group), a butyl group (an n-butyl group, an isobutyl group, or a t-butyl group), a pentyl group, a 1,1-dimethylpropyl group, a 2,2-dimethylpropyl group, and a linear or branched alkyl group such as a 2-methylbutyl group or a hexyl group are exemplified. As the aryl group, for example, a phenyl group, a naphthyl group, a benzyl group, a tolyl group, an o-, m-, or p-xylyl group, an anthracenyl group, or a phenanthrenyl group is exemplified. As the aralkyl group, for example, a phenyl group or naphthyl group having an alkyl group having 1 to 6 carbon atoms is exemplified. As the heteroaryl group, a monocyclic or polycyclic aromatic ring group including a carbon atom and one or a plurality of hetero atoms in a ring structure is exemplified. As the hetero atom, preferably, one to four hetero atoms are exemplified, and at least one atom selected from the group consisting of a nitrogen atom, an oxygen atom, a selenium atom, or a sulfur atom is preferably exemplified. For example, a pyridyl group, a pyrimidyl group, a pyrazoyl group, a triazinyl group, an imidazolyl group, a 1,2,3- or 1,2,4-triazolyl group, a tetrazolyl group, a furyl group, a thienyl group, an isoxazolyl group, a thiazolyl group, and a carbazoyl group are exemplified.

As the infrared absorber, a compound represented by Formula IV is particularly preferably exemplified.

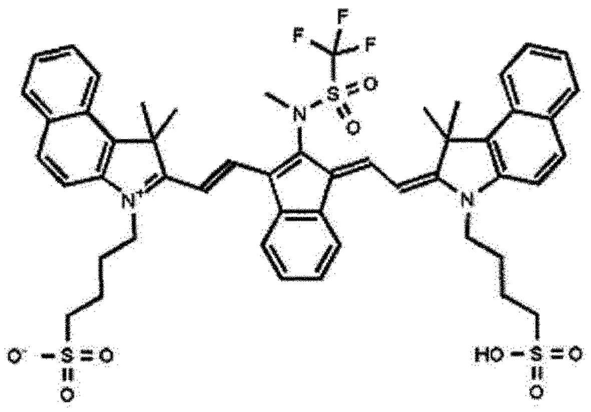

(IV)

As the infrared absorber, it is also preferable to jointly use the compound represented by Formula I and, for example, at least one infrared absorber selected from the group consisting of a cyanine dye, a merocyanine dye, an indoaniline dye, an oxonol dye, a pyrylium dye, and a squalium dye.

In addition, as examples of the infrared absorber that is used in the present disclosure, for example, infrared absorbers described in EP823327A, EP978376A, EP1029667A, EP1053868A, EP1093934A, WO97/39894A, or WO00/29214A are exemplified. As another preferred infrared absorber, for example, an infrared absorber described in the specification of EP1614541A from line 25 on page 20 to line 29 on page 44, an infrared absorber described in Paragraphs 0008 to 0021 in the specification of EP1736312A, an infrared absorber described in the specification of EP1910082A, and an infrared absorber described in the specification of EP2072570A are exemplified. These infrared absorbers are capable of forming an image by exposure to infrared light before development on a printer, and thus these infrared absorbers are particularly preferred for an aspect of on-press development on a printer. The infrared absorber that is used in the present disclosure is preferably water-soluble.

The infrared absorber may be used singly or two or more infrared absorbers may be jointly used. In addition, as the infrared absorber, a dye and a pigment may be jointly used.

The content of the infrared absorber in the image-recording layer is preferably 0.1% by mass to 30% by mass, more preferably 0.5% by mass to 25% by mass, still more preferably 6% by mass to 20% by mass, and particularly preferably 8% by mass to 15% by mass of the total mass of the image-recording layer. In addition, as described in the specification of EP1859936A, the amount of the infrared absorber can be adjusted with respect to the particle size of the thermoplastic polymer particle 2.

- Hydrophilic binder -

The image-recording layer preferably further includes a hydrophilic binder.

As the hydrophilic binder, for example, homopolymers and copolymers of vinyl alcohol, (meth)acrylamide, methylol (meth)acrylamide, (meth)acrylic acid, or hydroxyethyl (meth)acrylate, a maleic acid anhydride/vinyl methyl ether copolymer, and copolymers of (meth)acrylic acid or vinyl alcohol and styrene sulfonate are preferably exemplified.

Among them, as the hydrophilic binder, polyvinyl alcohol or polyacrylic acid is preferably included.

The content of the hydrophilic binder is preferably 2% by mass to 30% by mass, more preferably 2% by mass to 20% by mass, and still more preferably 3% by mass to 10% by mass of the total mass of the image-recording layer. In addition, the mass ratio of the content of the thermoplastic polymer particle 2 to the content of the hydrophilic binder (the content of the thermoplastic polymer particle 2/the content of the hydrophilic binder) is preferably 4 to 15, more preferably 5 to 12, and still more preferably 6 to 10.

The image-recording layer may include a colorant such as a dye or a pigment that imparts a visible color and remains in an exposed region in the image-recording layer after a process step. An image region that is not removed in the process step forms a visible image on a printing plate, which enables the inspection of a planographically printed image on the developed printing plate to be carried out.

As examples of the colorant, amino-substituted tri- or diarylmethane dyes such as crystal violet, methyl violet, Victoria pure blue, flexoblau 630, basonylblau 640, auramine and malachite green are preferably exemplified. In addition, a dye that is described in detail in the detailed description in the specification of EP400706A is an appropriate contrast dye and can be preferably used. In a preferred aspect, an anionic tri- or diarylmethane dye is used. A dye combined with a special additive simply colors the image-recording layer slightly, but strongly colors the image-recording layer

after exposure, and, for example, a dye described in WO2006/005688A is exemplified. As another preferred contrast dye, a contrast dye described in the specification of EP1914069A is exemplified. In addition, phthalocyanine and quinacridone pigments such as Heliogen Blau manufactured by BASF and PV23 (IJX1880) manufactured by Cabot Corporation are preferably used.

A typical contrast dye is capable of combining with or substituting an infrared dye capable of forming a visible color in the case of being exposed to infrared radiation such as an infrared dye described in the specification of EP1736312A and the specification of EP1910082A.

- Light stabilizer and antioxidant -

The image-recording layer may include a light stabilizer and/or an antioxidant.

The light stabilizer and the antioxidant are hindered phenol, hindered amine light stabilizers (HALS), N-oxyl radicals thereof, tocopherols, hydroxylamine derivatives, for example, hydroxamic acid and substituted hydroxylamine, hydrazides, thioethers, or trivalent organic phosphorus compounds, for example, phosphite and reductones. Among them, as the light stabilizer, reductones are preferably exemplified.

In addition, the image-recording layer preferably includes a phenol compound including a phenol ring that has at least one substituent represented by Formula V and a substituent having a Hammett value ($\sigma$p) of 0.3 or less which is randomly added. As the phenol compound, phenol, naphthol, or hydroxy substituted indole are preferably exemplified. As the substituent having a Hammett value ($\sigma$p) of 0.3 or less, for example, an alkyl group or aryl group substituted according to circumstances, a halogen atom, an alkoxy group, an alkylthio group, an amino group, and a hydroxy group are preferably exemplified.

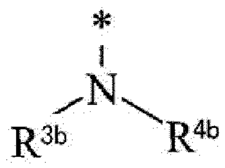

Formula V

In Formula V, * represents a linking site to an aromatic ring of the phenol compound, $R^{3b}$ and $R^{4b}$ each independently represent a hydrogen atom, an alkyl group substituted according to circumstances, an alkenyl group substituted according to circumstances, an alkynyl group substituted according to circumstances, an alkaryl group substituted according to circumstances, an aralkyl group substituted according to circumstances, and an aryl group or heteroaryl group substituted according to circumstances, $R^{3b}$ and $R^{4b}$ are capable of representing an atom necessary to form a five-membered ring to an eight-membered ring; here, $R^{3b}$ and $R^{4b}$ bond to N through a carbon-nitrogen bond; additionally, random $R^{3b}$ and $R^{4b}$ are capable of representing an atom necessary to form a five-membered ring or a six-membered ring together with N and a phenol ring.

- Other components -

The image-recording layer may include other components other than the above-described components.

As the other components, a well-known additive can be used. For example, an additive binder, a matting agent, a spacer, a surfactant, for example, a perfluoro surfactant, a silicon dioxide or titanium dioxide particle, a development inhibitor, a development accelerator, a metal complexing agent, and the like are exemplified.

The image-recording layer preferably includes an organic compound including at least one phosphonic acid group and at least one phosphoric acid group or a salt thereof as described in the specification of EP1940620A. The content of the organic compound and the salt thereof is preferably 0.05% by mass to 15% by mass, more preferably 0.5% by mass to 10% by mass, and still more preferably 1% by mass to 5% by mass of the total mass of the image-recording layer.

In addition, the above-described components can be present in the image-recording layer or other random layers.

- Formation of image-recording layer -

The image-recording layer in the planographic printing plate precursor according to the embodiment of the present disclosure can be imparted to and formed on a support using a well-known coating technique. A method in which

the image-recording layer is formed on the support, and then other layers are dried as generally known in the relevant technical field is exemplified.

The image-recording layer in the planographic printing plate precursor according to the embodiment of the present disclosure can be formed by, for example, as described in Paragraphs 0142 and 0143 of JP2008-195018A, preparing a coating fluid by dispersing or dissolving the respective necessary components described above in a well-known solvent, applying the coating fluid onto a support using a well-known method such as bar coater coating, and drying the coating fluid. The coating amount (solid content) of the image-recording layer applied after application and drying varies depending on applications; however, is preferably 0.3 g/m$^2$ to 3.0 g/m$^2$. Within this range, a favorable sensitivity and favorable membrane characteristics of the image-recording layer can be obtained.

<Protective layer>

The planographic printing plate precursor according to the embodiment of the present disclosure may have a protective layer on the image-recording layer in order to protect the surface of the image-recording layer from, particularly, mechanical damage. The protective layer preferably includes at least one water-soluble polymer binder, for example, polyvinyl alcohol, polyvinyl pyrrolidone, partially hydrolyzed polyvinyl acetate, gelatin, carbohydrate, or hydroxyethyl cellulose.

In addition, the protective layer may include a small amount, that is, less than 5% by mass of an organic solvent.

The thickness of the protective layer is not particularly limited, but is preferably 5.0 μm or less, more preferably 0.05 μm to 3.0 μm, and particularly preferably 0.10 μm to 1.0 μm.

<Undercoat Layer>

The planographic printing plate precursor according to the embodiment of the present disclosure may have an undercoat layer (in some cases, referred to as the interlayer) between the image-recording layer and the support. The undercoat layer facilitates peeling the image-recording layer from the support in non-exposed portions, and thus the undercoat layer contributes to improving developability. In addition, in the case of exposure using infrared lasers, the undercoat layer functions as an adiabatic layer and thus has an effect of preventing the sensitivity from being degraded due to the diffusion of heat generated by exposure in the support.

Examples of compounds that can be used for the undercoat layer include polymers having adsorbent groups that can be adsorbed to the surface of the support and hydrophilic groups. In order to improve adhesiveness to the image-recording layer, polymers having adsorbent groups and hydrophilic groups and further having crosslinking groups are preferred. The compounds that can be used for the undercoat layer may be low-molecular-weight compounds or polymers. The compounds that can be used for the undercoat layer may be used in a mixed form of two or more kinds as necessary.

<Aluminum support>

The aluminum support in the planographic printing plate precursor according to the embodiment of the present disclosure (also simply referred to as the "support".) can be appropriately selected from well-known supports for a planographic printing plate precursor and used.

The aluminum support is preferably an aluminum plate which has been roughened using a well-known method and anodized.

On the aluminum plate, as necessary, enlargement processes or sealing processes of micropores in anodized films described in JP2001-253181A and JP2001-322365A, surface hydrophilization processes using alkali metal silicate as described in the specifications of US2,714,066A, US3,181,461A, US3,280,734A, and US3,902,734A, and surface hydrophilization processes using polyvinyl phosphate or the like as described in the specifications of US3,276,868A, US4,153,461A, and US4,689,272A may be appropriately selected and carried out.

The arithmetical mean center-line roughness (Ra) (measured as a parameter using a needle geometry of 2/60° and a load of 15 mg according to ISO4288 and ISO3274) of the aluminum support that is used in the present disclosure is preferably 0.15 μm to 0.45 μm, more preferably 0.20 μm to 0.40 μm, and particularly preferably 0.25 μm to 0.38 μm. In addition, the value of Ra is preferably 0.10 μm or more.

From the viewpoint of wear resistance and hydrophilicity, the aluminum support is preferably an aluminum support having an anodized film.

The fine structure and thickness of an $Al_2O_3$ layer (anodized film) are determined by an anodization step. The amount of the anodized film on the aluminum support (the amount of $Al_2O_3$ formed on the surface of the aluminum support) is preferably 1 g/m$^2$ to 8 g/m$^2$, more preferably 2.5 g/m$^2$ to 5.5 g/m$^2$, still more preferably 3.0 g/m$^2$ to 5.0 g/m$^2$, and particularly preferably 3.5 g/m$^2$ to 4.5 g/m$^2$. The $Al_2O_3$ layer is formed under a remaining oxide film layer.

The hydrophilicity of the surface of the support can be improved by subjecting the grained and anodized support to a so-called post-anodic process. For example, silicate can be formed by processing the surface of the aluminum support using a solution including one or a plurality of alkali metal silicate compounds such as a solution including alkali metal phosphosilicate, orthosilicate, metasilicate, hydrosilicate, polysilicate, or pirosilicate at a high temperature of, for example, 95°C. Alternatively, a phosphate process including the processing of an aluminum oxide surface using a phosphoric acid solution capable of further including an inorganic fluoride may also be applied. Furthermore, the aluminum oxide surface can be rinsed with citric acid, a citrate solution, gluconic acid, or tartaric acid. This process can be carried out at room temperature (25°C) or may be carried out at a slightly increased temperature such as approximately 30°C to 50°C. Furthermore, in the above-described process, the aluminum oxide surface may be rinsed with a bicarbonate solution. Furthermore, the aluminum oxide surface can be processed using an acetal of polyvinyl alcohol formed by a reaction between polyvinylphosphonic acid, polyvinylmethylphosphonic acid, a phosphoric acid ester of polyvinyl alcohol, polyvinyl sulfonic acid, polyvinyl benzene sulfonic acid, a sulfuric ester of polyvinyl alcohol, or sulfonated aliphatic acid aldehyde and polyacrylic acid or a derivative such as GLASCOL E15 (trade name) manufactured by Ciba Speciality Chemicals Inc. One or a plurality of post processes described above can be carried out singly or two or more processes can be carried out in combination. Regarding these processes, it is possible to refer to, for example, the specification of GB1084070A, the specification of DE4423140A, the specification of DE4417907A, the specification of EP659909A, the specification of EP537633A, the specification of DE4001466A, the specification of EP292801A, the specification of EP291760A, and the specification of US4,458,005A. A post-anodic process of the grained and anodized support using a solution of polyvinyl methyl phosphonic acid having a pH of 2 or less is preferred since a printing plate having a highly improved clean-out property can be obtained.

As a specific aspect, for example, an aspect in which the support is processed first using an aqueous solution including one or a plurality of silicate compounds as described above, and, subsequently, the support is processed using an aqueous solution including a compound having a carboxylic acid group and/or a phosphonic acid group or a salt thereof is exemplified. As a preferred silicate compound, sodium or potassium orthosilicate and sodium or potassium metasilicate are exemplified. A preferred example of the compound having a carboxylic acid group and/or a phosphonic acid group or an ester or salt thereof includes polymers such as polyvinyl phosphonic acid, polyvinyl methyl phosphonic acid, a phosphoric ester of polyvinyl alcohol, polyacrylic acid, polymethacrylic acid, and a copolymer of acrylic acid and vinyl phosphonic acid. Among them, a solution including polyvinyl phosphonic acid or poly(meth)acrylic acid is particularly preferred.

<Backcoat layer>

The planographic printing plate precursor according to the embodiment of the present disclosure may have a backcoat layer on a surface of the support opposite to the image-recording layer. As the backcoat layer, for example, a backcoat layer including an organic polymer compound described in JP1993-045885A (JP-H05-045885A) or an alkoxy compound of silicon described in JP1994-035174A (JP-H06-035174A) is exemplified.

(Method for producing planographic printing plate)

A method for producing a planographic printing plate according to an embodiment of the present disclosure includes a step of exposing the negative-type planographic printing plate precursor according to the embodiment of the present disclosure in an image shape.

In addition, a preferred embodiment of the method for producing a planographic printing plate according to the embodiment of the present disclosure includes a step of exposing the negative-type planographic printing plate precursor according to the embodiment of the present disclosure in an image shape and a step of removing the image-recording layer in a non-image area from the exposed planographic printing plate precursor using a developer having a pH of 2 to 14.

Furthermore, another preferred embodiment of the method for producing a planographic printing plate according to the embodiment of the present disclosure includes a step of exposing the negative-type planographic printing plate precursor according to the embodiment of the present disclosure in an image shape and a step of removing the image-recording layer in a non-image area on a printer by supplying at least any of printing ink or dampening water and producing a planographic printing plate.

In the exposure step, the planographic printing plate precursor is exposed through a transparent original image having a line image, a halftone-dot image, or the like or exposed in an image shape by laser scanning and exposure using digital data. As an exposure light source, for example, a carbon arc, a high-pressure mercury lamp, a xenon lamp, a metal halide lamp, a fluorescent lamp, a tungsten lamp, a halogen lamp, an ultraviolet laser, a visible laser, and an infrared laser are exemplified. Particularly, a laser is preferred, and a semiconductor laser radiating light having a wavelength in a range of 250 nm to 420 nm, a solid-state laser radiating infrared ray having a wavelength in a range of 760 nm to 1,200 nm, a semiconductor laser, and the like are exemplified. In the case of using the laser, it is preferable

to carry out scanning and exposure in an image shape according to digital data. In addition, in order to shorten the exposure time, a multi-beam laser device is preferably used.

These lasers are used in a state of being mounted in a so-called platesetter which carries out exposure in an image shape by computer control.

In addition, an image can be formed by heating the planographic printing plate precursor according to the embodiment of the present disclosure according to the image using a heating element.

In the development after the exposure step, the non-exposed region (non-image area) of the image-recording layer is at least partially removed without essentially removing the exposed region, that is, without adversely affecting the exposed region until the ink-receiving property of the expose region cannot be allowed.

The planographic printing plate precursor according to the embodiment of the present disclosure can be developed using an appropriate developer outside a printer (off-press). This developer can be applied by rubbing, dipping, immersing, (spin) coating, spraying, or pouring either manually or using an automatic processing device, for example, an immersion pad. A process using the developer can be combined with mechanical friction using, for example, a rotary brush. The developed planographic printing plate precursor can be post-processed with rinsing water that is known in the relevant technical field or an appropriate correcting agent or preserving agent. During the development, the existing random protective layer is also preferably removed. As a preferred developer, fresh water, an alkali solution, or an aqueous solution is preferably exemplified. In addition, as the developer, a solution including gum (water-soluble polymer), which is used for gum-pulling, is preferably exemplified. The solution including gum is described in, for example, the specification of EP1342568A and WO2005/111727A. The development is preferably carried out using an automatic processing unit that is ordinary in the technical field of planographic printing plates at a temperature of 20°C to 40°C. After the development step for carrying out the development process, a rinsing step and a gum-pulling step may be subsequently carried out.

In the development process in the present disclosure, it is also possible to use a gum coater or an automatic developing machine that has been known in the related art for presensitized plates (PS plates) and computer to plates (CTP). In the case of using an automatic developing machine, for example, it is possible to apply any method of a method in which a developer prepared in a development tank or a developer prepared in an external tank is drawn using a pump and blown to a planographic printing plate precursor from a spray nozzle, a method in which a printing plate is immersed and transported in a liquid in a tank filled with a developer using a guide roll or the like, or a so-called single-use process method in which only a necessary amount of a substantially unused developer is supplied to each plate and is processed. In any methods, a rubbing mechanism such as a brush or a moulton roller is more preferably provided. For example, it is possible to use commercially available automatic developing machines (Clean Out Unit C85/C125, Clean-Out Unit+ C85/120, FCF85V, FCF 125V, FCF News (manufactured by Glunz & Jensen), Azura CX85, Azura CX125, Azura CX150 (manufactured by AGFAGRAPHICS). In addition, it is also possible to use a device into which a laser-exposed portion and an automatic developing machine portion are integrally combined.

In another aspect, the planographic printing plate precursor according to the embodiment of the present disclosure is installed in a printer after exposure and developed on the printer by supplying at least any of printing ink or dampening water to the planographic printing plate precursor. Alternatively, for example, development outside a printer using a gum-pulling solution (in this development, the non-exposed region of the image-recording layer is partially removed) can be combined with development on the printer, and, in this development, the removal of the non-exposed portion is realized.

The obtained planographic printing plate can be post-processed with a well-known correcting agent or preserving agent. In order to enhance the printing resistance of the finished printing plate and thus extend the run length, the plate can be heated at a high temperature (so-called baking). The printing plate can be dried before the baking or dried in a baking step. In the baking step, the printing plate is preferably heated at a temperature higher than the glass transition temperature of the thermoplastic polymer particle 2. The baking time is preferably longer than 15 seconds, more preferably longer than 20 seconds, and particularly preferably longer than 20 seconds and shorter than two minutes. The baking temperature is preferably higher than 60°C and more preferably higher than 100°C. For example, an aspect in which the planographic printing plate obtained by exposure and development is baked at a temperature of 230°C to 250°C for 30 seconds to 1.5 minutes is preferably exemplified. The baking can be carried out, for example, in an air-heating furnace or by irradiation using a lamp emitting an infrared or ultraviolet spectrum. As a result of this baking step, the resistance of the printing plate to a plate cleaner, the correcting agent, or an ultraviolet-curable ink enhances. A baking step disclosed in the specification of EP1767349A can also be applied to the present disclosure.

The planographic printing plate obtained as described above can be used in ordinary, that is, wet-type offset printing, and ink and dampening water are supplied to the plate in this printing. In another appropriate printing method, so-called single-fluid ink not containing dampening water is used. As the single-fluid ink, single-fluid ink described in the specification of US4,045,232A, the specification of US4,981,517A, and the specification of US6,140,392A can be preferably used. In addition, as the single-fluid ink, single-fluid ink including an ink phase that is also referred to as a so-called hydrophobic or lipophilic phase and a polyol phase as described in WO00/32705A can be particularly preferably

used.

Examples

Hereinafter, the present disclosure will be described in detail using examples, but the present disclosure is not limited thereto. Meanwhile, in the present examples, unless particularly otherwise described, "%" and "parts" respectively refer to "% by mass" and "parts by mass".

<Method for synthesizing B-1 that was polymer particle 1 having constitutional unit made of monomer having solubility parameter of 23 $MPa^{1/2}$ or more>

A polymer emulsion was prepared by seed emulsification polymerization using the specific monomer A-1. All surfactants were present in a reactor before the addition of a monomer. Chemfac PB-133 (Chemfac PB-133 manufactured by Chemax Corporation, alkyl phosphate ether surfactant) (10.35 g), $NaHCO_3$ (1.65 g), and demineralized water (1,482.1 g) were added to a 2-liter double jacketed reactor.

Nitrogen was caused to flow in the reactor, and the contents were heated up to 75°C. When the contents in the reactor reached a temperature of 75°C, the monomer (1.5%, 3.45 g) was added thereto. The monomer was emulsified at 75°C for 15 minutes, and subsequently, a 2% sodium persulfate aqueous solution (37.95 g) was added thereto. Subsequently, the reactor was heated to a temperature of 80°C for 30 minutes. Next, the remaining monomer (226.6 g) was injected into a reaction mixture for 180 minutes. At the same time as the addition of the monomer, an additive amount of a sodium persulfate aqueous solution (the 2% $Na_2S_2O_8$ aqueous solution (37.95 g)) was added thereto. After the completion of the addition of the monomer, the reactor was heated at 80°C for 60 minutes. In order to decrease the amount of the remaining monomer, distillation under reduced pressure was carried out at 80°C for one hour. Subsequently, the reactor was cooled to room temperature (25°C, which will be true below), Proxel Ultra 5 (manufactured by Arch Biocides Limited (UK), a 5% by mass aqueous solution of 1,2-benzisothiazole-3(2H)-one) (100 ppm) was added thereto as a disinfection agent, and latex was filtrated using coarse filter paper.

This generated a latex dispersion having an amount of a solid substance of 13.02% by mass (B-1). The average particle size was 33 mm in the case of being measured using Brookhaven BI-90 analyzer manufactured by Brookhaven Instrument Company in Holtsville, NY, USA. The measurement was carried out according to the sequence of ISO13321 (first edition, 1996-07-01).

<Method for synthesizing B-2 to B-12 that were polymer particle 1 having constitutional unit made of monomer having solubility parameter of 23 $MPa^{1/2}$ or more>

Particles were synthesized using the specific monomers A-2 to A-12 and the same synthesis method as for the polymer particle B-1. The synthesized particles were respectively regarded as B-2 to B-12.

<Method for synthesizing B-13 that was polymer particle 1 having constitutional unit made of monomer having solubility parameter of 23 $MPa^{1/2}$ or more>

A polymer emulsion was prepared by seed emulsification polymerization using the specific monomers A-6 and A-10 as monomers. All surfactants were present in a reactor before the addition of the monomers. Chemfac PB-133 (10.35 g), $NaHCO_3$ (1.65 g), and demineralized water (1,482.1 g) were added to a 2-liter double jacketed reactor. Nitrogen was caused to flow in the reactor, and the contents were heated up to 75°C. When the contents in the reactor reached a temperature of 75°C, a monomer mixture (1.5%, 1.16 g of A-6 and 2.29 g of A-10) was added thereto. The monomers were emulsified at 75°C for 15 minutes, and subsequently, a 2% sodium persulfate aqueous solution (37.95 g) was added thereto. Subsequently, the reactor was heated to a temperature of 80°C for 30 minutes. Next, the remaining monomer mixture (76.5 g of A-6 and 150.1 g of A-10) was injected into a reaction mixture for 180 minutes. At the same time as the addition of the monomers, an additive amount of a sodium persulfate aqueous solution (the 2% $Na_2S_2O_8$ aqueous solution (37.95 g)) was added thereto. After the completion of the addition of the monomers, the reactor was heated at 80°C for 60 minutes. In order to decrease the amount of the remaining monomers, distillation under reduced pressure was carried out at 80°C for one hour. Subsequently, the reactor was cooled to room temperature, Proxel Ultra 5 (100 ppm) was added thereto as a disinfection agent, and latex was filtrated using coarse filter paper.

<Method for synthesizing B-14 that was polymer particle 1 having constitutional unit made of monomer having solubility parameter of 23 $MPa^{1/2}$ or more>

A polymer emulsion was prepared by seed emulsification polymerization using the specific monomers A-10

and acrylonitrile (SP value=22.4 $MPa^{1/2}$) as monomers. All surfactants were present in a reactor before the addition of the monomers. Chemfac PB-133 (10.35 g), $NaHCO_3$ (1.65 g), and demineralized water (1,482.1 g) were added to a 2-liter double jacketed reactor. Nitrogen was caused to flow in the reactor, and the contents were heated up to 75°C. When the contents in the reactor reached a temperature of 75°C, a monomer mixture (1.5%, 3.10 g of A-10 and 0.35 g of acrylonitrile) was added thereto. The monomers were emulsified at 75°C for 15 minutes, and subsequently, a 2% sodium persulfate aqueous solution (37.95 g) was added thereto. Subsequently, the reactor was heated to a temperature of 80°C for 30 minutes. Next, the remaining monomer mixture (203.9 g of A-10 and 22.7 g of acrylonitrile) was injected into a reaction mixture for 180 minutes. At the same time as the addition of the monomers, an additive amount of a sodium persulfate aqueous solution (the 2% $Na_2S_2O_8$ aqueous solution (37.95 g)) was added thereto. After the completion of the addition of the monomers, the reactor was heated at 80°C for 60 minutes. In order to decrease the amount of the remaining monomers, distillation under reduced pressure was carried out at 80°C for one hour. Subsequently, the reactor was cooled to room temperature, Proxel Ultra 5 (100 ppm) was added thereto as a disinfection agent, and latex was filtrated using coarse filter paper.

<Method for synthesizing C-1 that was thermoplastic polymer particle 2>

A polymer emulsion was prepared by seed emulsification polymerization using styrene and acrylonitrile as monomers. All surfactants were present in a reactor before the addition of the monomers. Chemfac PB-133 (10.35 g), $NaHCO_3$ (1.65 g), and demineralized water (1,482.1 g) were added to a 2-liter double jacketed reactor. Nitrogen was caused to flow in the reactor, and the contents were heated up to 75°C. When the contents in the reactor reached a temperature of 75°C, the monomers (1.5%) were added thereto (a mixture of styrene (2.29 g) and acrylonitrile (1.16 g)). The monomers were emulsified at 75°C for 15 minutes, and subsequently, a 2% sodium persulfate aqueous solution (37.95 g) was added thereto. Subsequently, the reactor was heated to a temperature of 80°C for 30 minutes. Next, the remaining monomers (150.1 g of styrene and 76.5 g of acrylonitrile) were injected into a reaction mixture for 180 minutes. At the same time as the addition of the monomers, an additive amount of a sodium persulfate aqueous solution (the 2% $Na_2S_2O_8$ aqueous solution (37.95 g)) was added thereto. After the completion of the addition of the monomers, the reactor was heated at 80°C for 60 minutes. In order to decrease the amount of the remaining monomers, distillation under reduced pressure was carried out at 80°C for one hour. Subsequently, the reactor was cooled to room temperature, Proxel Ultra 5 (100 ppm) was added thereto as a disinfection agent, and latex was filtrated using coarse filter paper.

<Method for synthesizing C-2 and C-3 that were thermoplastic polymer particle 2>

Particles were synthesized using styrene and acrylonitrile as monomers and the same synthesis method as for the polymer particle C-1. The synthesized particles were respectively regarded as C-2 and C-3.

(Examples 1 to 19 and Comparative Examples 1 to 5)

<Production of support>

A 0.19 mm-thick aluminum plate was defatted by being immersed in a sodium hydroxide aqueous solution (40 g/L) at 60°C for eight seconds and washed with demineralized water for two seconds. Next, an electrochemical roughening process was carried out on the aluminum plate in an aqueous solution containing hydrochloric acid (12 g/L) and aluminum sulfate (octadecahydrate) (38 g/L) for 15 seconds using an alternating current at a temperature of 33°C and a current density of 130 $A/dm^2$. After washed with demineralized water for two seconds, the aluminum plate was desmutted by being etched with a sulfuric acid aqueous solution (155 g/L) at 70°C for four seconds and washed with demineralized water at 25°C for two seconds. The aluminum plate was anodized in a sulfuric acid aqueous solution (155 g/L) for 13 seconds at a temperature of 45°C and a current density of 22 $A/dm^2$ and washed with demineralized water for two seconds. Furthermore, the aluminum plate was post-processed using a polyvinyl phosphonate aqueous solution (4 g/L) at 40°C for 10 seconds, washed with demineralized water at 20°C for two seconds, and dried. The support obtained as described above had a surface roughness Ra of 0.21 $\mu$m and an amount of an anodized film of 4 $g/m^2$.

<Preparation of coating fluids for image-recording layer>

The kinds and amounts of the particle 1 and the thermoplastic polymer particle 2 used for the preparation of coating fluids used for the production of the image-recording layers are shown in Table 1. In addition, Table 2 shows the dried coating masses of components used for the preparation of the coating fluids. The particle 1 and the thermoplastic polymer particle 2 were added to demineralized water, and the obtained dispersion was stirred for five minutes. Subsequently, an infrared absorber was added thereto, and the solution was stirred for 30 minutes. A pigment-01, a pigment-02, a polyacrylic acid binder, and a stabilizer L-5 were added thereto at intervals of two minutes during which the components were stirred. Subsequently, 1-hydroxyethylidene-1,1-diphosphonic acid ammonium salt (HEDP) was added thereto, next, the components were stirred for five minutes, and, finally, a surfactant Zonyl FS0100 was added thereto.

The obtained coating fluid was stirred for 30 minutes, and the pH was adjusted to a value of 3.2.

[Table 1]

| | Image-recording layer | | | | | | |
|---|---|---|---|---|---|---|---|
| | Particle 1 | | | | | Thermoplastic polymer particle 2 | |
| | Kind | Specific polymer | | Content (mg/m$^2$) | | Kind | Content (mg/m$^2$) |
| | | Kind of monomer | SP value (MPa$^{1/2}$) | | | | |
| Example 1 | B-1 | A-1 | 23.2 | 100 | | C-1 | 300 |
| Example 2 | B-2 | A-2 | 23.6 | 100 | | C-1 | 300 |
| Example 3 | B-3 | A-3 | 23.9 | 100 | | C-1 | 300 |
| Example 4 | B-4 | A-4 | 25.2 | 100 | | C-1 | 300 |
| Example 5 | B-5 | A-5 | 24.1 | 100 | | C-1 | 300 |
| Example 6 | B-6 | A-6 | 24.2 | 100 | | C-1 | 300 |
| Example 7 | B-7 | A-7 | 25.3 | 100 | | C-1 | 300 |
| Example 8 | B-8 | A-8 | 26.1 | 100 | | C-1 | 300 |
| Example 9 | B-9 | A-9 | 26.1 | 100 | | C-1 | 300 |
| Example 10 | B-10 | A-10 | 29.3 | 100 | | C-1 | 300 |
| Example 11 | B-11 | A-11 | 30.3 | 100 | | C-1 | 300 |
| Example 12 | B-12 | A-12 | 31.3 | 100 | | C-1 | 300 |
| Example 13 | B-13 | A-6/A-10 | 24.2/29.3 | 100 | | C-1 | 300 |
| Example 14 | B-10 | A-10 | 29.3 | 50 | | C-1 | 350 |
| Example 15 | B-10 | A-10 | 29.3 | 150 | | C-1 | 250 |
| Example 16 | B-10 | A-10 | 29.3 | 200 | | C-1 | 200 |
| Example 17 | B-10 | A-10 | 29.3 | 100 | | C-2 | 300 |
| Example 18 | B-10 | A-10 | 29.3 | 100 | | C-3 | 300 |
| Example 19 | B-14 | A-10/acrylonitrile | 29.3/22.4 | 100 | | C-1 | 300 |
| Comparative Example 1 | - | - | - | - | | C-1 | 400 |
| Comparative Example 2 | - | - | - | - | | C-2 | 400 |
| Comparative Example 3 | - | - | - | - | | C-3 | 400 |
| Comparative Example 4 | - | - | - | - | | C-2 | 100 |
| | | | | | | C-1 | 300 |
| Comparative Example 5 | D-1 | - | - | 100 | | C-1 | 300 |

D-1: Silica particle, SNOWTEX ST-OL manufactured by Nissan Chemical Corporation (particle diameter: 40

nm to 50 nm).

[Table 2]

| Component* | Content (mg/m$^2$) |
|---|---|
| Particle 1 | Shown in Table 1 |
| Thermoplastic polymer particle 2 | Shown in Table 1 |
| Polyacrylic acid binder 3 | 32 |
| Infrared absorber 4 | 68 |
| Dye-1 (5) | 20 |
| Dye-2 (6) | 20 |
| Stabilizer 7 | 5 |
| Al-ion complexing agent 8 | 26 |
| Zonyl FS0100(9) | 5 |

Polyacrylic acid binder 3: An aqueous solution containing Aqualic AS58 (1.5% by mass) manufactured by Nippon Shokubai Co., Ltd.

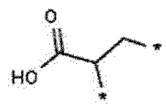

Infrared absorber 4: Aqueous dispersion containing the following infrared absorber (3.0% by mass):

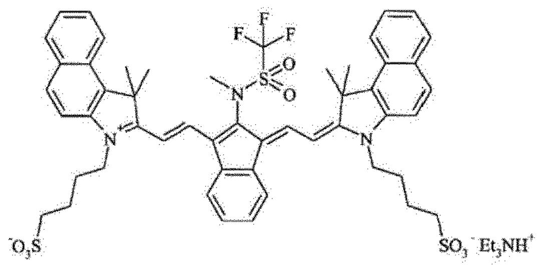

The infrared absorber 4 can be prepared using a well-known synthesis method as disclosed in, for example, the specification of EP2072579A.

Pigment-01 (5): An aqueous dispersion obtained by grinding Heliogen Blau D7490 (manufactured by BASF) (20.0% by mass) with 0.4 mm pearl, stabilizing Heliogen Blau D7490 with sodium dodecyl sulfate (manufactured by Applichem GmbH) (2.0% by mass), and obtaining an average particle diameter of 105 nm. This dispersion includes 1,2-benzisothiazole-3(2H)-one manufactured by Arch Biocides Limited (UK) (0.1% by mass).

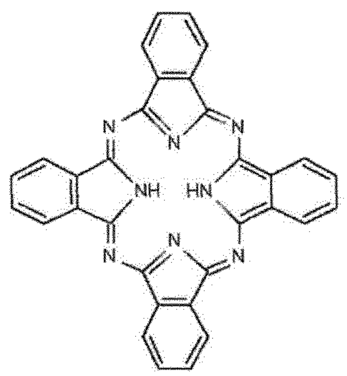

Pigment-02 (6): An aqueous blue pigment dispersion IJX1880 manufactured by Cabot Corporation

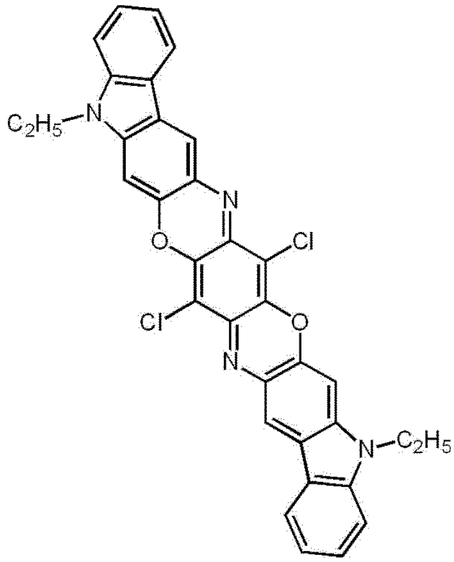

Stabilizer 7: daylight stabilizer L-5-hydroxytryptophan manufactured by Acros Chimica N.V.;

Al-ion complexing agent 8: An aqueous solution containing 1-hydroxyethylidene-1,1-diphosphonic acid ammonium salt (HEDP) (6% by mass) manufactured by Monsanto Company
Zonyl FS0100 (9): An aqueous solution containing a fluorine surfactant Zonyl FS0100 (5% by mass) manufactured by Du Pont

<Production of planographic printing plates>

Planographic printing plate precursors of Examples 1 to 19 and Comparative Examples 1 to 5 were respectively produced using the following method.
The respective coating fluids for an image-recording layer shown in Table 1 or Table 2 were applied onto the support by means of bar coating, and the upper side of the plate was dried at 35°C for five minutes, thereby obtaining coating compositions as listed in Table 1 or Table 2.

<Evaluation of UV ink printing resistance>

[Image exposure]

The planographic printing plate precursors were exposed in Luxel PLATESETTER T-6000III equipped with an infrared semiconductor laser manufactured by Fujifilm Corporation under conditions of an external surface drum rotation speed of 1,000 rpm (rotations per minute), a laser output of 100%, and a resolution of 2,400 dpi (dots per inch) so that the energy density reached 160 mJ/$cm^2$. Exposed images were provided with a solid image and a 3% halftone dot chart.

[Development process]

The planographic printing plates were operated using Clean-Out Unit+ C85 (manufactured by Glunz & Jensen) at 60 cm/min and 25°C, developed and gum-pulled using Azura TS Gum which was a developer manufactured by Afga Graphics.

[Printing]

The exposed and developed planographic printing plate was attached to a cylinder of a medium octavo paper-size printer SX-74 manufactured by Heidelberger Druckmaschinen AG without being developed. To the present printer, a 100 L-capacity dampening water circulation tank having a non-woven fabric filter and a temperature control device

was connected. Dampening water (80 L) containing 2.0% of dampening water S-Z1 (manufactured by Fujifilm Corporation) was prepared in a circulation device, T&K UV OFS K-HS black GE-M (ultraviolet-curable ink (UV ink), manufactured by T&K TOKA Co., Ltd.) was used as printing ink, dampening water and ink were supplied using a standard automatic printing start method, and then printing was carried out on TOKUBISHI art paper (76.5 kg) at a printing rate of 10,000 pieces per hour.

As the number of pieces of printed paper increased, the image area gradually wore, and thus the ink density on printed matters decreased. The number of pieces of paper printed until the value of the halftone dot area ratio of AM screen 3% by area halftone dots on a printed matter measured using a gretag density meter (manufactured by Gretag Macbeth) decreased to be 1% lower than the measurement value obtained from the 500th piece of printed paper was used as the number of pieces of completely printed paper to evaluate the printing resistance. The printing resistance was evaluated using relative printing resistance for which the value obtained in a case in which the number of pieces of printed paper reached 50,000 was considered as 100. As the numerical value increase, the printing resistance becomes more favorable. The evaluation results are shown in Table 3.

$$\text{Relative printing resistance} = (\text{number of pieces of printed paper of subject planographic printing plate precursor})/50{,}000 \times 100$$

<Evaluation of sensitivity>

[Image exposure]

The planographic printing plate precursors were exposed in Luxel PLATESETTER T-6000III equipped with an infrared semiconductor laser manufactured by Fujifilm Corporation at the following energy densities: 120 $mJ/cm^2$, 137 $mJ/cm^2$, 160 $mJ/cm^2$, and 180 $mJ/cm^2$.

[Development process]

The planographic printing plates were operated using Clean-Out Unit+ C85 (manufactured by Glunz & Jensen) at 60 cm/min and 25°C, developed and gum-pulled using Azura TS Gum which was a developer manufactured by Afga Graphics.

[Printing]

The exposed and developed planographic printing plates were attached to a cylinder of a printer SOR-M manufactured by Heidelberger Druckmaschinen AG. Dampening water and ink were supplied thereto using dampening water (EU-3 (etchant manufactured by Fujifilm Corporation)/water/isopropyl alcohol=1/89/10 (capacity ratio)) and TRANS-G(N) Black ink (manufactured by DIC Corporation), and then printing was carried out on 500 pieces of paper at a printing rate of 6,000 pieces per hour.

Regarding the respective energy densities, that is, regarding 120 $mJ/cm^2$, 137 $mJ/cm^2$, 160 $mJ/cm^2$, and 180 $mJ/cm^2$, the optical densities of a B25 2% dot pattern were measured using a densitometer Type D19C manufactured by Gretag Macbeth as a function of the number of printed sheets.

The B25 2% dot pattern was made up of 2%ABS (200 lpi and 2,400 dpi), and the total surface coating percentage of these dots was 25%. The ABS dot was produced using an Agfa Balanced Screening method. Additional information of the B25 2% dot pattern which is also known as a matrix or algorithm of Bayer is described in document: Bayer, B. E., "An Optimum Method for Two-Level Rendition of Continuous Tone Pictures," IEEE International Conference on Communications, Conference Records, 1973, pp. 26-11 to 26-15.

The sensitivity was determined by comparing the optical density values obtained regarding the respective plates with an optical density value obtained regarding a reference plate exposed at 200 $mJ/cm^2$. For the sensitivity, an optical density equal to an optical density imparted to a sheet printed using the reference plate was defined as an energy density necessary to obtain a printing plate to be imparted to a sheet to be printed. The results of the sensitivity test were shown in Table 3.

[Table 3]

| | Image-recording layer | | | | | | Evaluation results | |
|---|---|---|---|---|---|---|---|---|
| | Particle 1 | | | | Thermoplastic polymer particle 2 | | UV ink printing resistance | Sensitivity (mJ/m$^2$) |
| | Kind | Specific polymer | | Content (mg/m$^2$) | Kind | Content (mg/m$^2$) | | |
| | | Kind of monomer | SP value (MPa$^{1/2}$) | | | | | |
| Example 1 | B-1 | A-1 | 23.2 | 100 | C-1 | 300 | 55 | 160 |
| Example 2 | B-2 | A-2 | 23.6 | 100 | C-1 | 300 | 55 | 160 |
| Example 3 | B-3 | A-3 | 23.9 | 100 | C-1 | 300 | 60 | 160 |
| Example 4 | B-4 | A-4 | 25.2 | 100 | C-1 | 300 | 70 | 160 |
| Example 5 | B-5 | A-5 | 24.1 | 100 | C-1 | 300 | 55 | 160 |
| Example 6 | B-6 | A-6 | 24.2 | 100 | C-1 | 300 | 65 | 160 |
| Example 7 | B-7 | A-7 | 25.3 | 100 | C-1 | 300 | 70 | 160 |
| Example 8 | B-8 | A-8 | 26.1 | 100 | C-1 | 300 | 70 | 160 |
| Example 9 | B-9 | A-9 | 26.1 | 100 | C-1 | 300 | 70 | 160 |
| Example 10 | B-10 | A-10 | 29.3 | 100 | C-1 | 300 | 75 | 160 |
| Example 11 | B-11 | A-11 | 30.3 | 100 | C-1 | 300 | 75 | 160 |
| Example 12 | B-12 | A-12 | 31.3 | 100 | C-1 | 300 | 80 | 160 |
| Example 13 | B-13 | A-6/A-10 | 24.2/29.3 | 100 | C-1 | 300 | 75 | 160 |
| Example 14 | B-10 | A-10 | 29.3 | 50 | C-1 | 350 | 65 | 160 |
| Example 15 | B-10 | A-10 | 29.3 | 150 | C-1 | 250 | 70 | 160 |
| Example 16 | B-10 | A-10 | 29.3 | 200 | C-1 | 200 | 70 | 160 |
| Example 17 | B-10 | A-10 | 29.3 | 100 | C-2 | 300 | 65 | 140 |
| Example 18 | B-10 | A-10 | 29.3 | 100 | C-3 | 300 | 60 | 180 |
| Example 19 | B-14 | A-10/acrylonitrile | 29.3/22.4 | 100 | C-1 | 300 | 65 | 160 |
| Comparative Example 1 | - | - | - | - | C-1 | 400 | 20 | 160 |
| Comparative Example 2 | - | - | - | - | C-2 | 400 | 10 | 140 |
| Comparative Example 3 | - | - | - | - | C-3 | 400 | 10 | 180 |

(continued)

| | Image-recording layer | | | | | | Evaluation results | |
|---|---|---|---|---|---|---|---|---|
| | Particle 1 | | | | Thermoplastic polymer particle 2 | | UV ink printing resistance | Sensitivity (mJ/$m^2$) |
| | Kind | Specific polymer | | Content (mg/$m^2$) | Kind | Content (mg/$m^2$) | | |
| | | Kind of monomer | SP value ($MPa^{1/2}$) | | | | | |
| Comparative Example 4 | - | - | - | - | C-2 | 100 | 10 | 160 |
| | | | | | C-1 | 300 | | |
| Comparative Example 5 | D-1 | - | - | 100 | C-1 | 300 | 20 | 180 |

From the results of Table 3, it is clear that the planographic printing plate precursor according to the embodiment of the present disclosure is superior to the planographic printing plate precursors of the comparative examples in terms of the printing resistance even in the case of using ultraviolet-curable ink.

(Examples 20 to 38 and Comparative Examples 6 to 10)

<Production of support>

A 0.19 mm-thick aluminum plate was defatted by being immersed in a sodium hydroxide aqueous solution (40 g/L) at 60°C for eight seconds and washed with demineralized water for two seconds. Next, an electrochemical roughening process was carried out on the aluminum plate in an aqueous solution containing hydrochloric acid (12 g/L) and aluminum sulfate (octadecahydrate) (38 g/L) for 15 seconds using an alternating current at a temperature of 33°C and a current density of 130 A/dm$^2$. After washed with demineralized water for two seconds, the aluminum plate was desmutted by being etched with a sulfuric acid aqueous solution (155 g/L) at 70°C for four seconds and washed with demineralized water at 25°C for two seconds. The aluminum plate was anodized in a sulfuric acid aqueous solution (155 g/L) for 13 seconds at a temperature of 45°C and a current density of 22 A/dm$^2$ and washed with demineralized water for two seconds. Furthermore, the aluminum plate was post-processed using a polyvinyl phosphonate aqueous solution (4 g/L) at 40°C for 10 seconds, washed with demineralized water at 20°C for two seconds, and dried. The support obtained as described above had a surface roughness Ra of 0.21 μm and an amount of an anodized film of 4 g/m$^2$.

<Preparation of coating fluid for image-recording layer>

The kinds and amounts of the particle 1 and the thermoplastic polymer particle 2 used for the preparation of coating fluids used for the production of the image-recording layers are shown in Table 4. In addition, the coating fluids for an image-recording layer containing components such as a thermoplastic particle polymer, an infrared absorber, and a polyglycerol compound were prepared, and the pH was adjusted to 3.6.

[Table 4]

| | Image-recording layer | | | | | |
|---|---|---|---|---|---|---|
| | Particle 1 | | | | Thermoplastic polymer particle 2 | |
| | Kind | Specific polymer | | Content (mg/m$^2$) | Kind | Content (mg/m$^2$) |
| | | monomer | (MPa$^{1/2}$) | | | |
| Example 20 | B-1 | A-1 | 23.2 | 100 | C-1 | 300 |
| Example 21 | B-2 | A-2 | 23.6 | 100 | C-1 | 300 |
| Example 22 | B-3 | A-3 | 23.9 | 100 | C-1 | 300 |
| Example 23 | B-4 | A-4 | 25.2 | 100 | C-1 | 300 |
| Example 24 | B-5 | A-5 | 24.1 | 100 | C-1 | 300 |
| Example 25 | B-6 | A-6 | 24.2 | 100 | C-1 | 300 |
| Example 26 | B-7 | A-7 | 25.3 | 100 | C-1 | 300 |
| Example 27 | B-8 | A-8 | 26.1 | 100 | C-1 | 300 |
| Example 28 | B-9 | A-9 | 26.1 | 100 | C-1 | 300 |
| Example 29 | B-10 | A-10 | 29.3 | 100 | C-1 | 300 |
| Example 30 | B-11 | A-11 | 30.3 | 100 | C-1 | 300 |
| Example 31 | B-12 | A-12 | 31.3 | 100 | C-1 | 300 |
| Example 32 | B-13 | A-6/A-10 | 24.2/29.3 | 100 | C-1 | 300 |
| Example 33 | B-10 | A-10 | 29.3 | 50 | C-1 | 350 |
| Example 34 | B-10 | A-10 | 29.3 | 150 | C-1 | 250 |
| Example 35 | B-10 | A-10 | 29.3 | 200 | C-1 | 200 |

(continued)

| | Image-recording layer | | | | | |
|---|---|---|---|---|---|---|
| | Particle 1 | | | | Thermoplastic polymer particle 2 | |
| | Kind | Specific polymer | | Content (mg/m$^2$) | Kind | Content (mg/m$^2$) |
| | | monomer | (MPa$^{1/2}$) | | | |
| Example 36 | B-10 | A-10 | 29.3 | 100 | C-2 | 300 |
| Example 37 | B-10 | A-10 | 29.3 | 100 | C-3 | 300 |
| Example 38 | B-14 | A-10/acrylonitril | 29.3/22.4 | 100 | C-1 | 300 |
| Comparative Example 6 | - | - | - | - | C-1 | 400 |
| Comparative Example 7 | - | - | - | - | C-2 | 400 |
| Comparative Example 8 | - | - | - | - | C-3 | 400 |
| Comparative Example 9 | - | - | - | - | C-2 | 100 |
| | | | | | C-1 | 300 |
| Comparative Example 10 | D-1 | - | - | 100 | C-1 | 300 |

[Table 5]

| Component* | Content (mg/m$^2$) |
|---|---|
| Particle 1 | Shown in Table 4 |
| Thermoplastic polymer particle 2 | Shown in Table 4 |
| Polyacrylic acid binder 3 | 32 |
| Infrared absorber 10 | 68 |
| Polyglycerol compound 11 | 40 |
| Stabilizer 7 | 5 |
| Al-ion complexing agent 8 | 26 |
| Zonyl FS0100(9) | 5 |

Infrared absorber 10 was synthesized according to the following scheme. Et represents an ethyl group, and Me represents a methyl group.

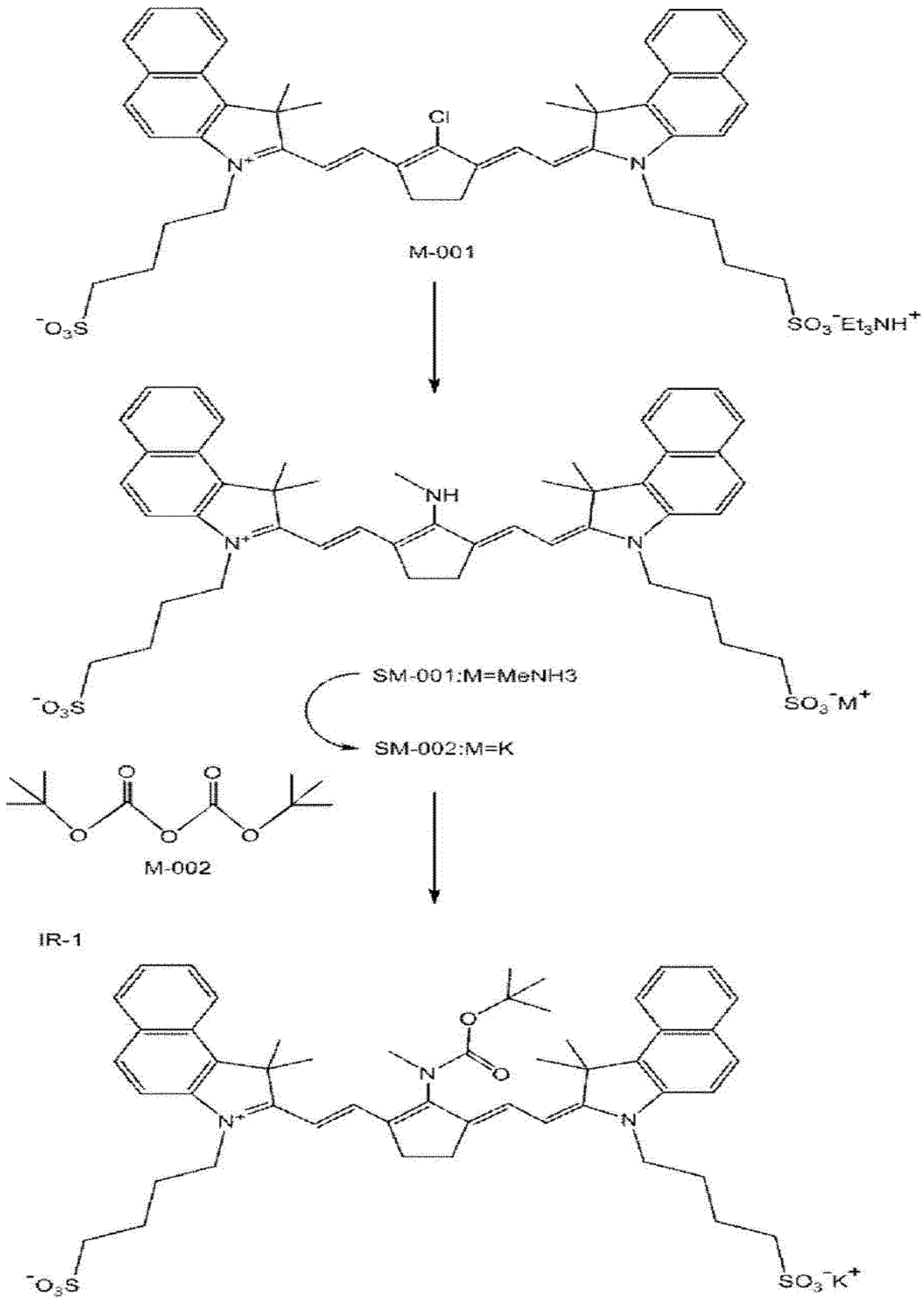


M-001 (230.0 g) synthesized according to the description in the specification of US5,576,443A was added to and dissolved in methanol (600 mL), and this solution was added to a solution (200 mL) containing 40% w/w of methylamine in water at room temperature. The components were stirred at 40°C for one hour, then, isopropanol (250 mL) was added thereto, and a reaction mixture was cooled to 5°C. The generated precipitate was filtrated, washed twice in

an ice-chilled mixture (100 mL) of isopropanol and water (9/1), and dried in the air, thereby obtaining SM-001 (199.5 g).

SM-001 (199.5 g) was dissolved in methanol (1.8 L), and a solution containing KOH (41.6 g) in water (120 mL) was added to the solution for 30 minutes while intensively stirring the solution. After stirred at room temperature for one hour, the reaction mixture was cooled to 15°C. The generated precipitate was filtrated, washed twice with cold ethanol (100 mL) on a filter, and dried in the air, thereby obtaining SM-002 (177.2 g).

M-002 (8.7 g) and potassium t-butoxide (KOt-Bu, 1.3 g) were added to a suspension containing SM-002 (8.2 g) in dimethyl sulfoxide (30 mL). This mixture was stirred at room temperature for three days and then cooled to 5°C, methanesulfonic acid (0.78 mL) was added thereto, and a precipitate was generated using a mixture of ethyl acetate and water (100/1). The precipitate was suspended in acetone, filtrated and dried, thereby obtaining an infrared absorber 10 (9.4 g).

Polyglycerol compound 11: Polyglycerin PGL 10 (the number of the repeating units: 10) (manufactured by Daicel Corporation)

<Production of planographic printing plate precursors>

Planographic printing plate precursors of Examples 20 to 38 and Comparative Examples 6 to 10 were respectively produced using the following method.

The respective coating fluids for an image-recording layer shown in Table 4 or Table 5 were applied onto the support by means of bar coating, and an upper side of the plate was dried at 35°C for five minutes, thereby obtaining coating compositions listed in Table 4 or

Table 5.

<Evaluation of UV ink printing resistance>

[Image exposure]

The planographic printing plate precursors were exposed in Luxel PLATESETTER T-6000III equipped with an infrared semiconductor laser manufactured by Fujifilm Corporation under conditions of an external surface drum rotation speed of 1,000 rpm (rotations per minute), a laser output of 100%, and a resolution of 2,400 dpi (dots per inch) so that the energy density reached 160 mJ/cm$^2$. Exposed images were provided with a solid image and a 3% halftone dot chart.

[Printing]

The obtained developed precursor was attached to a cylinder of a medium octavo paper-size printer SX-74 manufactured by Heidelberger Druckmaschinen AG without being developed. To the present printer, a 100 L-capacity dampening water circulation tank having a non-woven fabric filter and a temperature control device was connected. Dampening water (80 L) containing 2.0% of dampening water S-Z1 (manufactured by Fujifilm Corporation) was prepared in a circulation device, T&K UV OFS K-HS black GE-M (manufactured by T&K TOKA Co., Ltd.) was used as printing ink, dampening water and ink were supplied using a standard automatic printing start method, and then printing was carried out on 500 pieces of TOKUBISHI art paper (76.5 kg) at a printing rate of 10,000 pieces per hour.

As the number of pieces of printed paper increased, the image area gradually wore, and thus the ink density on printed matters decreased. The number of pieces of paper printed until the value of the halftone dot area ratio of AM screen 3% by area halftone dots on a printed matter measured using a gretag density meter (manufactured by Gretag Macbeth) decreased to be 1% lower than the measurement value obtained from the 500$^{th}$ piece of printed paper was used as the number of pieces of completely printed paper to evaluate the printing resistance. The printing resistance was evaluated using relative printing resistance for which the value obtained in a case in which the number of pieces of printed paper reached 50,000 was considered as 100. As the numerical value increase, the printing resistance becomes more favorable. The evaluation results are shown in Table 6.

$$\text{Relative printing resistance} = (\text{number of pieces of printed paper of subject planographic printing plate precursor})/50{,}000 \times 100$$

<Evaluation of sensitivity>

[Image exposure]

The planographic printing plate precursors were exposed in Luxel PLATESETTER T-6000III equipped with an infrared semiconductor laser manufactured by Fujifilm Corporation at the following energy densities: 120 mJ/cm$^2$, 137 mJ/cm$^2$, 160 mJ/cm$^2$, and 180 mJ/cm$^2$.

[Printing]

The obtained exposed precursors were attached to a cylinder of a printer SOR-M manufactured by Heidelberger Druckmaschinen AG without being developed. Dampening water and ink were supplied thereto using dampening water (EU-3 (etchant manufactured by Fujifilm Corporation)/water/isopropyl alcohol=1/89/10 (capacity ratio)) and TRANS-G(N) Black ink (manufactured by DIC Corporation), and then printing was carried out on 500 pieces of paper at a printing rate of 6,000 pieces per hour.

Regarding the respective energy densities, that is, regarding 120 mJ/cm$^2$, 137 mJ/cm$^2$, 160 mJ/cm$^2$, and 180 mJ/cm$^2$, the optical densities of a B25 2% dot pattern were measured using a densitometer Type D19C manufactured by Gretag Macbeth as a function of the number of printed sheets.

The B-25 2% dot pattern was made up of 2%ABS (200 lpi and 2,400 dpi), and the total surface coating percentage of these dots was 25% by mass. The ABS dot was produced using an Agfa Balanced Screening method. Additional information of the B-25 2% dot pattern which is also known as a matrix or algorithm of Bayer is described in document: Bayer, B. E., "An Optimum Method for Two-Level Rendition of Continuous Tone Pictures," IEEE International Conference on Communications, Conference Records, 1973, pp. 26-11 to 26-15.

The sensitivity was determined by comparing the optical density values obtained regarding the respective plates with an optical density value obtained regarding a reference plate exposed at 200 mJ/cm$^2$. For the sensitivity, an optical density equal to an optical density imparted to a sheet printed using the reference plate was defined as an energy density necessary to obtain a printing plate to be imparted to a sheet to be printed. The results of the sensitivity test were shown in Table 6.

[Table 6]

| | Image-recording layer | | | | | | Evaluation results | |
|---|---|---|---|---|---|---|---|---|
| | Particle 1 | | | | Thermoplastic polymer particle 2 | | UV ink printing resistance | Sensitivity (mJ/m$^2$) |
| | Kind | Specific polymer | | Content (mg/m$^2$) | Kind | Content (mg/m$^2$) | | |
| | | Kind of monomer | SP value (MPa$^{1/2}$) | | | | | |
| Example 20 | B-1 | A-1 | 23.2 | 100 | C-1 | 300 | 50 | 160 |
| Example 21 | B-2 | A-2 | 23.6 | 100 | C-1 | 300 | 50 | 160 |
| Example 22 | B-3 | A-3 | 23.9 | 100 | C-1 | 300 | 55 | 160 |
| Example 23 | B-4 | A-4 | 25.2 | 100 | C-1 | 300 | 65 | 160 |
| Example 24 | B-5 | A-5 | 24.1 | 100 | C-1 | 300 | 50 | 160 |
| Example 25 | B-6 | A-6 | 24.2 | 100 | C-1 | 300 | 60 | 160 |
| Example 26 | B-7 | A-7 | 25.3 | 100 | C-1 | 300 | 65 | 160 |
| Example 27 | B-8 | A-8 | 26.1 | 100 | C-1 | 300 | 65 | 160 |
| Example 28 | B-9 | A-9 | 26.1 | 100 | C-1 | 300 | 65 | 160 |
| Example 29 | B-10 | A-10 | 29.3 | 100 | C-1 | 300 | 70 | 160 |
| Example 30 | B-11 | A-11 | 30.3 | 100 | C-1 | 300 | 70 | 160 |
| Example 31 | B-12 | A-12 | 31.3 | 100 | C-1 | 300 | 75 | 160 |
| Example 32 | B-13 | A-6/A-10 | 24.2/29.3 | 100 | C-1 | 300 | 70 | 160 |
| Example 33 | B-10 | A-10 | 29.3 | 50 | C-1 | 350 | 60 | 160 |
| Example 34 | B-10 | A-10 | 29.3 | 150 | C-1 | 250 | 65 | 160 |
| Example 35 | B-10 | A-10 | 29.3 | 200 | C-1 | 200 | 65 | 160 |
| Example 36 | B-10 | A-10 | 29.3 | 100 | C-2 | 300 | 60 | 140 |
| Example 37 | B-10 | A-10 | 29.3 | 100 | C-3 | 300 | 55 | 180 |
| Example 38 | B-14 | A-10/acrylonitrile | 29.3/22.4 | 100 | C-1 | 300 | 60 | 160 |

(continued)

| | Image-recording layer | | | | | | Evaluation results | |
|---|---|---|---|---|---|---|---|---|
| | Particle 1 | | | | Thermoplastic polymer particle 2 | | UV ink printing resistance | Sensitivity ($mJ/m^2$) |
| | Kind | Specific polymer | | Content ($mg/m^2$) | Kind | Content ($mg/m^2$) | | |
| | | Kind of monomer | SP value ($MPa^{1/2}$) | | | | | |
| Comparative Example 6 | - | - | - | - | C-1 | 400 | 15 | 160 |
| Comparative Example 7 | - | - | - | - | C-2 | 400 | 8 | 140 |
| Comparative Example 8 | - | - | - | - | C-3 | 400 | 8 | 180 |
| Comparative Example 9 | - | - | - | - | C-2 | 100 | 8 | 160 |
| | | | | | C-1 | 300 | | |
| Comparative Example 10 | D-1 | - | - | 100 | C-1 | 300 | 15 | 180 |

From the results shown in Table 6, regarding the aspect of on-machine development, the planographic printing plate precursor according to the embodiment of the present disclosure is superior to the planographic printing plate precursors of the comparative examples in terms of the printing resistance even in the case of using ultraviolet-curable ink.

The disclosure of JP2017-162182 filed on August 25, 2017 is mentioned herein.

## Claims

1. A negative-type planographic printing plate precursor comprising:

   an image-recording layer on an aluminum support,
   wherein the image-recording layer includes a polymer particle 1 having a constitutional unit made of a monomer having a solubility parameter of 23 $MPa^{1/2}$ or more, a thermoplastic polymer particle 2, and an infrared absorber, and
   at least any of fusion or aggregation of the thermoplastic polymer particle 2 is caused by heat during exposure, whereby an image can be formed, **characterized in that**
   a polymer in the particle 1 has at least one structure selected from the group consisting of a urethane bond, a sulfonamide group, an imide group, an amino group, and a sulfonimide group.

2. A negative-type planographic printing plate precursor comprising:

   an image-recording layer on an aluminum support,
   wherein the image-recording layer includes a polymer particle 1 having a constitutional unit made of a monomer having a solubility parameter of 23 $MPa^{1/2}$ or more, a thermoplastic polymer particle 2, and an infrared absorber, and
   at least any of fusion or aggregation of the thermoplastic polymer particle 2 is caused by heat during exposure, whereby an image can be formed, **characterized in that**
   in the particle 1, a content of the constitutional unit made of a monomer having a solubility parameter of 23 $MPa^{1/2}$ or more is 80 % by mass or more.

3. The negative-type planographic printing plate precursor according to claim 1 or 2,
   wherein the solubility parameter of the monomer is 25 $MPa^{1/2}$ or more.

4. The negative-type planographic printing plate precursor according to any one of claims 1 to 3,
   wherein the solubility parameter of the monomer is 30 $MPa^{1/2}$ or more.

5. The negative-type planographic printing plate precursor according to any one of claims 2 to 4,
   wherein a polymer in the particle 1 has at least one structure selected from the group consisting of a urethane bond, a urea bond, a hydroxy group, an amide group, a sulfonamide group, an imide group, an amino group, and a sulfonimide group.

6. The negative-type planographic printing plate precursor according to any one of claims 2 to 5,
   wherein a polymer in the particle 1 has at least one structure selected from the group consisting of a urethane bond, a sulfonamide group, an imide group, an amino group, and a sulfonimide group.

7. The negative-type planographic printing plate precursor according to any one of claims 1 to 6,
   wherein a polymer in the particle 1 has at least one structure selected from the group consisting of a urethane bond, a sulfonamide group, and an imide group.

8. The negative-type planographic printing plate precursor according to any one of claims 1 to 7,
   wherein the particle 2 includes at least one polymer selected from the group consisting of polyethylene, polyvinyl chloride, polymethyl (meth)acrylate, polyethyl (meth)acrylate, polyvinylidene chloride, poly(meth)acrylonitrile, polyvinyl carbazole, polystyrene, and copolymers thereof.

9. The negative-type planographic printing plate precursor according to any one of claims 1 to 8,

   wherein the infrared absorber is a compound represented by Formula A,

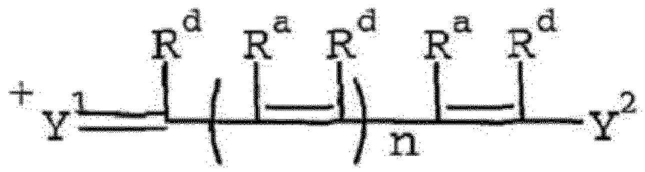

Formula A

wherein, in Formula A, $^{+}Y^{1}=$ is represented by one of the following structures:

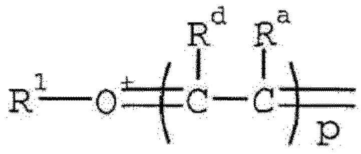

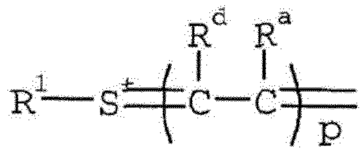

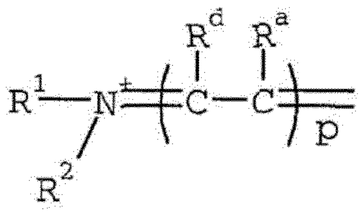

and $Y^{2}$- is represented by one of the following structures:

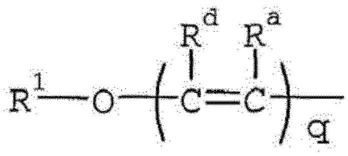

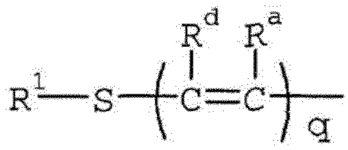

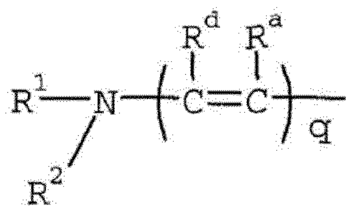

wherein n represents 0, 1, 2, or 3, p and q each independently represent 0, 1, or 2, $R^1$ and $R^2$ each independently represent a hydrocarbon group or two of $R^1$, $R^2$, $R^d$, and $R^a$ include atoms necessary to form a cyclic structure by being integrated with each other and at least one of $R^d$'s represents a group being converted to a group that is a stronger electron-donating body than $R^d$ by a chemical reaction that is induced by irradiation with an infrared ray or exposure to heat, or at least one of $R^a$'s represents a group being converted to a group that is a stronger electron-donating body than $R^a$ by a chemical reaction that is induced by irradiation with an infrared ray or exposure to heat and other $R^d$'s and $R^a$'s each independently represent a group selected from the group

consisting of a hydrogen atom, a halogen atom, $-R^e$, $-OR^f$, $-SR^g$, and $-NR^uR^v$, wherein $R^e$, $R^f$, $R^g$, $R^u$, and $R^v$ each independently represent an aliphatic hydrocarbon group, an aryl group, or a heteroaryl group, and the conversion is conversion causing an increase in absorption of light having a wavelength of 400 nm to 700 nm.

**10.** The negative-type planographic printing plate precursor according to any one of claims 1 to 9, wherein the aluminum support is an aluminum support having an anodized film.

**11.** The negative-type planographic printing plate precursor according to claim 10, wherein an amount of the anodized film on the aluminum support is 2.5 $g/m^2$ to 5.5 g/m2.

**12.** The negative-type planographic printing plate precursor according to claim 10 or 11, wherein an amount of the anodized film on the aluminum support is 3.5 $g/m^2$ to 5.0 g/m2.

**13.** A method for producing a planographic printing plate comprising:

a step of exposing the negative-type planographic printing plate precursor according to any one of claims 1 to 12 in an image shape; and
a step of removing the image-recording layer in a non-image area using a developer having a pH of 2 to 14.

**14.** A method for producing a planographic printing plate comprising:

a step of exposing the negative-type planographic printing plate precursor according to any one of claims 1 to 12 in an image shape; and
a step of removing the image-recording layer in a non-image area on a printer by supplying at least any of printing ink or dampening water and producing a planographic printing plate.

**Patentansprüche**

**1.** Flachdruckplattenvorläufer vom Negativtyp, umfassen:

eine Bildaufzeichnungsschicht auf einem Aluminiumträger;
worin die Bildaufzeichnungsschicht einen Polymerpartikel 1 mit einer Aufbaueinheit, die aus einem Monomer mit einem Löslichkeitsparameter von 23 $MPa^{1/2}$ oder größer hergestellt ist, einen thermoplastischen Polymerpartikel 2 und einen Infrarotabsorber umfasst, und
worin zumindest irgendeines von Verschmelzung oder Aggregation des thermoplastischen Polymerpartikels 2 durch Wärme während der Belichtung verursacht wird, wodurch ein Bild gebildet werden kann, **dadurch gekennzeichnet, dass**
ein Polymer in dem Partikel 1 mindestens eine Struktur aufweist, die ausgewählt ist aus der Gruppe bestehend aus einer Urethanbindung, einer Sulfonamidgruppe, einer Imidgruppe, einer Aminogruppe und einer Sulfonimidgruppe.

**2.** Flachdruckplattenvorläufer vom Negativtyp, umfassend:

eine Bildaufzeichnungsschicht auf einem Aluminiumträger;
worin die Bildaufzeichnungsschicht einen Polymerpartikel 1 mit einer Aufbaueinheit, die aus einem Monomer mit einem Löslichkeitsparameter von 23 $MPa^{1/2}$ oder größer hergestellt ist, einen thermoplastischen Polymerpartikel 2 und einen Infrarotabsorber umfasst, und
worin zumindest irgendeines von Verschmelzung oder Aggregation des thermoplastischen Polymerpartikels 2 durch Wärme während der Belichtung verursacht wird, wodurch ein Bild gebildet werden kann, **dadurch gekennzeichnet, dass**
in dem Partikel 1 der Anteil der Aufbaueinheit, die aus einem Monomer mit einem Löslichkeitsparameter von 23 $MPa^{1/2}$ oder größer hergestellt ist, 80 Masse-% oder mehr beträgt.

**3.** Flachdruckplattenvorläufer vom Negativtyp gemäß Anspruch 1 oder 2, worin der Löslichkeitsparameter des Monomers 25 $MPa^{1/2}$ oder größer ist.

**4.** Flachdruckplattenvorläufer vom Negativtyp gemäß irgendeinem der Ansprüche 1 bis 3, worin der Löslichkeitsparameter des Monomers 30 $MPa^{1/2}$ oder größer ist.

**5.** Flachdruckplattenvorläufer vom Negativtyp gemäß irgendeinem der Ansprüche 2 bis 4, worin ein Polymer in dem Partikel 1 zumindest eine Struktur aufweist, die ausgewählt ist aus der Gruppe bestehend aus einer Urethanbindung, einer Harnstoffbindung, einer Hydroxygruppe, einer Amidgruppe, einer Sulfonamidgruppe, einer Imidgruppe, einer Aminogruppe und einer Sulfonimidgruppe.

**6.** Flachdruckplattenvorläufer vom Negativtyp gemäß irgendeinem der Ansprüche 2 bis 5,
worin ein Polymer in dem Partikel 1 zumindest eine Struktur aufweist, die ausgewählt ist aus der Gruppe bestehend aus einer Urethanbindung, einer Sulfonamidgruppe, einer Imidgruppe, einer Aminogruppe und einer Sulfonimidgruppe.

**7.** Flachdruckplattenvorläufer vom Negativtyp gemäß irgendeinem der Ansprüche 1 bis 6,
worin ein Polymer in dem Partikel 1 zumindest eine Struktur aufweist, die ausgewählt ist aus der Gruppe bestehend aus einer Urethanbindung, einer Sulfonamidgruppe und einer Imidgruppe.

**8.** Flachdruckplattenvorläufer vom Negativtyp gemäß irgendeinem der Ansprüche 1 bis 7,
worin der Partikel 2 mindestens ein Polymer umfasst, das ausgewählt ist aus der Gruppe bestehend aus Polyethylen, Polyvinylchlorid, Polymethyl(meth)acrylat, Polyethyl(meth)acrylat, Polyvinylidenchlorid, Poly(meth)acrylnitril, Polyvinylcarbazol, Polystyrol und Copolymeren hiervon.

**9.** Flachdruckplattenvorläufer vom Negativtyp gemäß irgendeinem der Ansprüche 1 bis 8,

worin der Infrarotabsorber eine durch die Formel A dargestellte Verbindung ist:

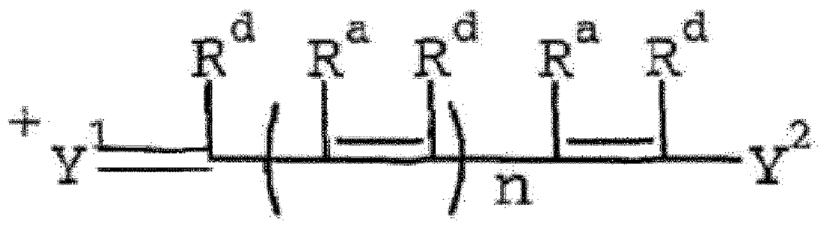

Formel A

worin in der Formel A $^{+}Y^{1}=$ durch irgendeine der folgenden Strukturen dargestellt ist:

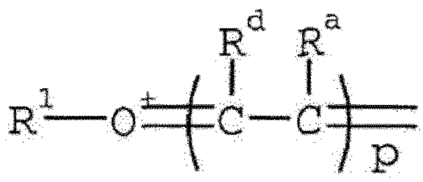

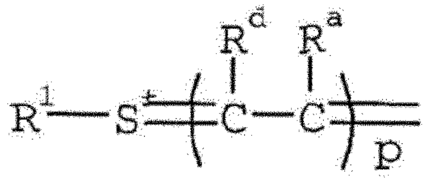

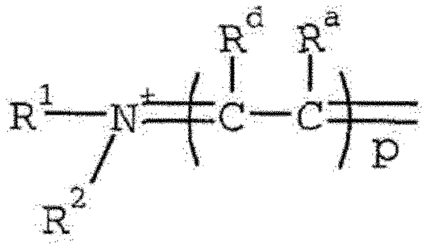

und $Y^2$- durch irgendeine der folgenden Strukturen dargestellt ist:

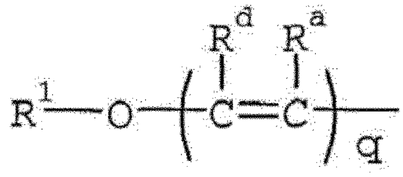

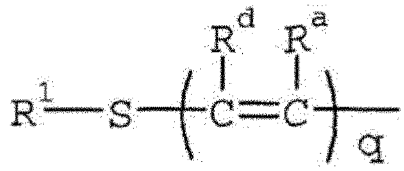

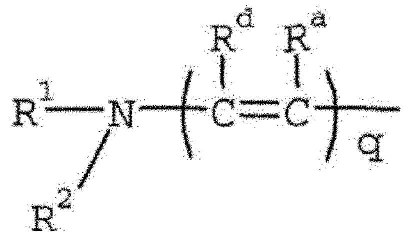

worin n 0, 1, 2 oder 3 dargestellt, p und q jeweils unabhängig 0, 1 oder 2 darstellen, $R^1$ und $R^2$ jeweils unabhängig eine Kohlenwasserstoffgruppe darstellen oder zwei von $R^1$, $R^2$, $R^d$ und $R^a$ Atome umfassen, die zum Bilden einer cyclischen Struktur notwendig sind, indem sie miteinander integriert sind, und zumindest eines der $R^d$ eine Gruppe darstellt, die durch eine chemische Reaktion, die durch Infrarotbestrahlung oder Wärme induziert wird, zu einer Gruppe umgewandelt wird, die ein stärker elektronenspendender Körper ist als $R^d$, oder zumindest eines der $R^a$ eine Gruppe darstellt, die durch eine chemische Reaktion, die durch Infrarotbestrahlung oder Wärme induziert wird, zu einer Gruppe umgewandelt wird, die ein stärker elektronenspendender Körper ist als $R^a$, und die anderen $R^d$ und $R^a$ jeweils unabhängig eine Gruppe darstellen, die ausgewählt ist aus der Gruppe bestehend aus einem Wasserstoffatom, einem Halogenatom, $-R^e$, $-OR^f$, $-SR^g$ und $-NR^uR^v$, worin $R^e$, $R^f$, $R^g$, $R^u$ und $R^v$ jeweils unabhängig eine aliphatische Kohlenwasserstoffgruppe, einer Arylgruppe oder eine Heteroarylgruppe darstellen, und die Umwandlung eine Umwandlung ist, die eine Erhöhung der Absorption von Licht mit einer Wellenlänge von 400 nm bis 700 nm verursacht.

**10.** Flachdruckplattenvorläufer vom Negativtyp gemäß irgendeinem der Ansprüche 1 bis 9, worin der Aluminiumträger ein Aluminiumträger ist, der einen anodisierten Film aufweist.

**11.** Flachdruckplattenvorläufer vom Negativtyp gemäß Anspruch 10,
worin die Menge des anodisierten Films auf dem Aluminiumträger 2,5 g/m$^2$ bis 5,5 g/m$^2$ beträgt.

**12.** Flachdruckplattenvorläufer vom Negativtyp gemäß Anspruch 10 oder 11, worin die Menge des anodisierten Films auf dem Aluminiumträger 2,5 g/m$^2$ bis 5,0 g/m$^2$ beträgt.

**13.** Verfahren zur Herstellung einer Flachdruckplatte, umfassend:

einen Schritt zum Belichten des Flachdruckplattenvorläufers vom Negativtyp gemäß irgendeinem der Ansprüche 1 bis 12 in Bildform; und
einen Schritt zum Entfernen der Bildaufzeichnungsschicht in einem Nicht-Bildbereich unter Verwendung eines Entwicklers, der einen pH-Wert von 2 bis 14 aufweist.

**14.** Verfahren zur Herstellung einer Flachdruckplatte, umfassend:

einen Schritt zum Belichten des Flachdruckplattenvorläufers vom Negativtyp gemäß irgendeinem der Ansprüche 1 bis 12 in Bildform; und

einen Schritt zum Entfernen der Bildaufzeichnungsschicht in einem Nicht-Bildbereich auf einen Drucker durch Zuführen von zumindest einem von Drucktinte oder Anfeuchtwasser, und zum Herstellen einer Flachdruckplatte.

## Revendications

**1.** Précurseur de plaque d'impression planographique négative comprenant :

une couche d'enregistrement d'images sur un support en aluminium,
dans lequel la couche d'enregistrement d'images comporte une particule polymère 1 présentant une unité constitutive constituée d'un monomère ayant un paramètre de solubilité de 23 $MPa^{1/2}$ ou plus, une particule polymère thermoplastique 2, et un absorbeur infrarouge, et
au moins l'une quelconque d'une fusion ou d'une agrégation de la particule polymère thermoplastique 2 est provoquée par de la chaleur pendant une exposition, ce par quoi une image peut être formée, **caractérisé en ce que**
un polymère dans la particule 1 présente au moins une structure sélectionnée dans le groupe consistant en une liaison uréthane, un groupe sulfonamide, un groupe imide, un groupe amino, et un groupe sulfonimide.

**2.** Précurseur de plaque d'impression planographique négative comprenant :

une couche d'enregistrement d'images sur un support en aluminium,
dans lequel la couche d'enregistrement d'images comporte une particule polymère 1 présentant une unité constitutive constituée d'un monomère ayant un paramètre de solubilité de 23 $MPa^{1/2}$ ou plus, une particule polymère thermoplastique 2, et un absorbeur infrarouge, et
au moins l'une quelconque d'une fusion ou d'une agrégation de la particule polymère thermoplastique 2 est provoquée par de la chaleur pendant une exposition, ce par quoi une image peut être formée, **caractérisé en ce que**
dans la particule 1, une teneur de l'unité constitutive constituée d'un monomère ayant un paramètre de solubilité de 23 $MPa^{1/2}$ ou plus est de 80 % en masse ou plus.

**3.** Précurseur de plaque d'impression planographique négative selon la revendication 1 ou la revendication 2, dans lequel le paramètre de solubilité du monomère est de 25 $MPa^{1/2}$ ou plus.

**4.** Précurseur de plaque d'impression planographique négative selon l'une quelconque des revendications 1 à 3, dans lequel le paramètre de solubilité du monomère est de 30 $MPa^{1/2}$ ou plus.

**5.** Précurseur de plaque d'impression planographique négative selon l'une quelconque des revendications 2 à 4, dans lequel un polymère dans la particule 1 présente au moins une structure sélectionnée dans le groupe consistant en une liaison uréthane, une liaison urée, un groupe hydroxy, un groupe amide, un groupe sulfonamide, un groupe imide, un groupe amino, et un groupe sulfonimide.

**6.** Précurseur de plaque d'impression planographique négative selon l'une quelconque des revendications 2 à 5, dans lequel un polymère dans la particule 1 présente au moins une structure sélectionnée dans le groupe consistant en une liaison uréthane, un groupe sulfonamide, un groupe imide, un groupe amino, et un groupe sulfonimide.

**7.** Précurseur de plaque d'impression planographique négative selon l'une quelconque des revendications 1 à 6, dans lequel un polymère dans la particule 1 présente au moins une structure sélectionnée dans le groupe consistant en une liaison uréthane, un groupe sulfonamide, et un groupe imide.

**8.** Précurseur de plaque d'impression planographique négative selon l'une quelconque des revendications 1 à 7, dans lequel la particule 2 comporte au moins un polymère sélectionné dans le groupe consistant en le polyéthylène, le polychlorure de vinyle, le polyméthacrylate de méthyle, le polyméthacrylate d'éthyle, le chlorure de polyvinylidène, le poly(méth)acrylonitrile, le polyvinyl carbazole, le polystyrène et leurs copolymères.

**9.** Précurseur de plaque d'impression planographique négative selon l'une quelconque des revendications 1 à 8,

dans lequel l'absorbeur infrarouge est un composé représenté par la formule A,

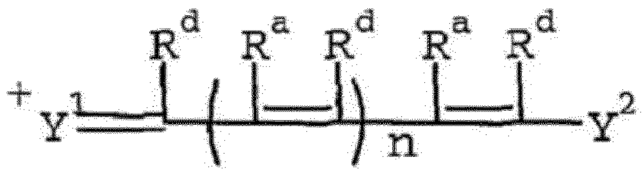

Formule A

dans lequel, dans la formule A, $^{+}Y^{1}=$ est représenté par l'une des structures suivantes :

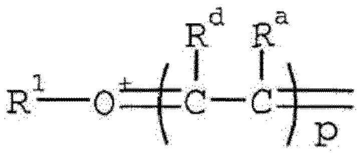

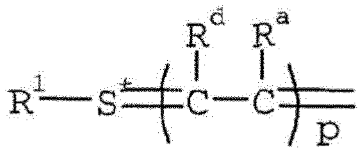

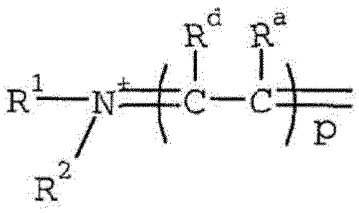

et $Y^{2}$- est représenté par l'une des structures suivantes :

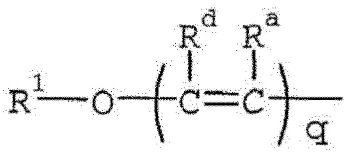

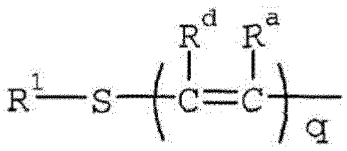

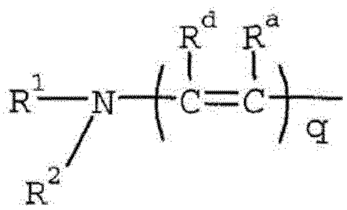

dans lequel n représente 0, 1, 2 ou 3, p et q représentent chacun indépendamment 0, 1 ou 2, $R^1$ et $R^2$ représentent chacun indépendamment un groupe hydrocarboné ou deux de $R^1$, $R^2$, $R^d$, et $R^a$ comportent des atomes nécessaires pour former une structure cyclique en étant intégrés les uns aux autres et au moins l'un de $R^d$s représente un groupe converti en un groupe qui est un corps donneur d'électrons plus fort que $R^d$ par une réaction chimique qui est induite par rayonnement avec un rayon infrarouge ou une exposition à la chaleur, ou au moins l'un de $R^a$s représente un groupe qui est converti en un groupe qui est un corps donneur d'électrons plus fort que $R^a$ par une réaction chimique qui est induite par rayonnement avec un rayon infrarouge ou une

exposition à la chaleur et d'autres $R^d$s et $R^a$s représentent chacun indépendamment un groupe sélectionné dans le groupe consistant en un atome d'hydrogène, un atome d'halogène, $-R^e$, $-OR^f$, $-SR^g$, et $-NR^uR^v$, dans lequel $R^e$, $R^f$, $R^g$, $R^u$, et $R^v$ représentent chacun indépendamment un groupe hydrocarboné aliphatique, un groupe aryle, ou un groupe hétéroaryle, et la conversion est une conversion provoquant une augmentation d'absorption de lumière présentant une longueur d'onde de 400 nm à 700 nm.

**10.** Précurseur de plaque d'impression planographique négative selon l'une quelconque des revendications 1 à 9, dans lequel le support en aluminium est un support en aluminium ayant un film anodisé.

**11.** Précurseur de plaque d'impression planographique négative selon la revendication 10, dans lequel une quantité du film anodisé sur le support en aluminium est de 2,5 g/$m^2$ à 5,5 g/$m^2$.

**12.** Précurseur de plaque d'impression planographique négative selon la revendication 10 ou la revendication 11, dans lequel une quantité du film anodisé sur le support en aluminium est de 3,5 g/$m^2$ à 5,0 g/$m^2$.

**13.** Procédé de production d'une plaque d'impression planographique comprenant :

une étape d'exposition du précurseur de plaque d'impression planographique de type négative selon l'une quelconque des revendications 1 à 12 dans une forme d'image ; et
une étape de retrait de la couche d'enregistrement d'images dans une zone de non-image à l'aide d'un révélateur ayant un pH de 2 à 14.

**14.** Procédé de fabrication d'une plaque d'impression planographique comprenant :

une étape d'exposition du précurseur de plaque d'impression planographique négative selon l'une quelconque des revendications 1 à 12 dans une forme d'image ; et
une étape de retrait de la couche d'enregistrement d'images dans une zone de non-image sur une imprimante en fournissant au moins l'une quelconque d'une encre d'impression ou d'une eau de mouillage et de production d'une plaque d'impression planographique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002333705 A
- EP 3632694 A1
- JP 2013504632 A
- JP 2003001959 A
- JP 2002225452 A
- JP 2008544322 A
- JP 2003034090 A
- EP 1859935 A
- EP 1219416 A
- JP 2001133969 A
- JP 2002023360 A
- JP 2002040638 A
- JP 2002278057 A
- JP 2008195018 A
- JP 2007090850 A
- JP 2012206495 A
- JP 5005005 A
- JP H05005005 A
- JP 2001222101 A
- EP 823327 A
- EP 978376 A
- EP 1029667 A
- EP 1053868 A
- EP 1093934 A
- WO 9739894 A
- WO 0029214 A
- EP 1614541 A
- EP 1736312 A
- EP 1910082 A
- EP 2072570 A
- EP 1859936 A
- EP 400706 A
- WO 2006005688 A
- EP 1914069 A
- EP 1940620 A
- JP 2001253181 A
- JP 2001322365 A
- US 2714066 A
- US 3181461 A
- US 3280734 A
- US 3902734 A
- US 3276868 A
- US 4153461 A
- US 4689272 A
- GB 1084070 A
- DE 4423140 A
- DE 4417907 A
- EP 659909 A
- EP 537633 A
- DE 4001466 A
- EP 292801 A
- EP 291760 A
- US 4458005 A
- JP 5045885 A
- JP H05045885 A
- JP 6035174 A
- JP H06035174 A
- EP 1342568 A
- WO 2005111727 A
- EP 1767349 A
- US 4045232 A
- US 4981517 A
- US 6140392 A
- WO 0032705 A
- EP 2072579 A
- US 5576443 A
- JP 2017162182 A


### Non-patent literature cited in the description


- An Optimum Method for Two-Level Rendition of Continuous Tone Pictures. **BAYER, B. E.** IEEE International Conference on Communications. Conference Records, 1973, 26-11, 26-15